(19) Europäisches Patentamt
European Patent Office
Office européen des brevets

(11) **EP 4 257 549 A1**

(12) **EUROPEAN PATENT APPLICATION**
published in accordance with Art. 153(4) EPC

(43) Date of publication:
**11.10.2023 Bulletin 2023/41**

(21) Application number: **21900619.4**

(22) Date of filing: **01.12.2021**

(51) International Patent Classification (IPC):
$C01B\ 35/12$ (2006.01)    $H01M\ 4/13$ (2010.01)
$H01M\ 4/36$ (2006.01)    $H01M\ 4/62$ (2006.01)
$H01B\ 1/06$ (2006.01)    $H01B\ 1/08$ (2006.01)
$H01M\ 10/052$ (2010.01)    $H01M\ 10/0562$ (2010.01)

(52) Cooperative Patent Classification (CPC):
C01B 35/12; H01B 1/06; H01B 1/08; H01M 4/13;
H01M 4/36; H01M 4/62; H01M 10/052;
H01M 10/0562; Y02E 60/10

(86) International application number:
**PCT/JP2021/044020**

(87) International publication number:
**WO 2022/118868 (09.06.2022 Gazette 2022/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.12.2020   JP 2020200154**
                **22.09.2021   JP 2021154390**

(71) Applicants:
• **FUJIFILM Corporation**
  **Tokyo 106-8620 (JP)**

• **Tokyo Institute of Technology**
  **Tokyo 152-8550 (JP)**

(72) Inventors:
• **SHIRATORI Yosuke**
  **Ashigarakami-gun, Kanagawa 258-8577 (JP)**
• **OKUNO Yukihiro**
  **Ashigarakami-gun, Kanagawa 258-8577 (JP)**
• **YASUI Shintaro**
  **Tokyo 152-8550 (JP)**

(74) Representative: **HGF**
**HGF Limited**
**1 City Walk**
**Leeds LS11 9DX (GB)**

(54) **OXIDE SOLID ELECTROLYTE, BINDER, SOLID ELECTROLYTE LAYER, ACTIVE MATERIAL, ELECTRODE, AND ALL-SOLID-STATE SECONDARY BATTERY**

(57)    An object of the present invention is to provide an oxide solid electrolyte that is more excellent in ionic conductivity. In addition, another object of the present invention is to provide a binder, a solid electrolyte layer, an active material, an electrode, and an all-solid state secondary battery.

The oxide solid electrolyte according to the present invention is an oxide solid electrolyte represented by General Formula (I).

$$A_aB_bO_cX_d\ .\ .\ .\qquad\text{(I)}$$

in General Formula (I), A represents at least one selected from the group consisting of Li and Na,
X represents at least one selected from the group consisting of F, Cl, Br, I, S, N, H, Se, Te, C, P, Si, Al, Ga, In, Ge, As, Sb, and Sn,
a represents the number of moles of each element represented by A and satisfies $1.75 < a < 2.45$,
b satisfies $3.75 < b < 4.25$,
c satisfies $6.50 < c < 10.00$, and
d represents a total number of moles of elements represented by X and satisfies $0 < d < 0.50$.

EP 4 257 549 A1

**Description**

**BACKGROUND OF THE INVENTION**

1. Field of the Invention

The present invention relates to an oxide solid electrolyte, a binder, a solid electrolyte layer, an active material, an electrode, and an all-solid state secondary battery.

2. Description of the Related Art

In the related art, a liquid electrolyte having high ion conductivity has been used in a lithium ion secondary battery. However, the liquid electrolyte is often flammable, and thus there is a problem in safety. In addition, since it is in a liquid state, it is difficult to make it compact, and in a case where a battery becomes large, there is also a problem of limitation on capacity.

On the other hand, the all-solid state secondary battery is one of the next-generation batteries that can solve these problems. In the all-solid state battery, a solid electrolyte having good ion conductivity is required in order to obtain desired charging and discharging characteristics.

For example, JP2019-040709A discloses an all-solid state lithium ion secondary battery, the all-solid state lithium ion secondary battery having a positive electrode layer containing a positive electrode active material, a negative electrode layer containing a negative electrode active material, and an oxide solid electrolyte layer provided between the positive electrode layer and the negative electrode layer, where the oxide solid electrolyte layer contains a solid electrolyte of oxide glass ceramics containing $Li_3BO_3$ and $Li_2SO_4$, and the negative electrode layer is coated with a hydride solid electrolyte so that the solid electrolyte of oxide glass ceramics does not come into direct contact with the negative electrode active material.

**SUMMARY OF THE INVENTION**

An oxide solid electrolyte is excellent in terms of safety and stability in the atmospheric air. However, particles thereof are relatively hard as compared with a sulfide solid electrolyte which is soft and easily deformed plastically, and thus the contact area between the particles tends to be small, and the resistance at the interface tends to be higher. In order to improve the interfacial adhesiveness between particles of an oxide solid electrolyte and to improve the ion conductivity, there is known a technique of carrying out a heating treatment such as sintering or vapor deposition of the oxide solid electrolyte. Regarding the sintering, a high resistance phase may appear due to a reaction between an active material and a solid electrolyte, and thus there is a problem that warping or breakage occurs due to the contraction of the solid. The vapor deposition method has low productivity and is not suitable for mass production.

Therefore, the inventors of the present invention diligently studied means for improving ionic conductivity without depending on the above-described heating treatment, for an oxide solid electrolyte excellent in safety and stability, and as a result, it was found that there is room for further improvement in the composition of the oxide solid electrolyte.

In consideration of the above circumstances, an object of the present invention is to provide an oxide solid electrolyte that is more excellent in ionic conductivity.

In addition, another object of the present invention is to provide a binder, a solid electrolyte layer, an active material, an electrode, and an all-solid state secondary battery.

As a result of diligent studies to solve the above-described problems, the inventors of the present invention have completed the present invention having the following configurations.

[1] An oxide solid electrolyte represented by General Formula (I) described later.
[2] The oxide solid electrolyte according to [1], in which the oxide solid electrolyte satisfies the following requirements 1-1 and 1-2 described later.
[3] An oxide solid electrolyte, in which the oxide solid electrolyte contains Li, B, O, and X, and satisfies the following requirement A-1 and requirement A-2 described later,
where X represents at least one kind of element selected from the group consisting of F, Cl, Br, I, S, N, H, Se, Te, C, P, Si, Al, Ga, In, Ge, As, Sb, and Sn.
[4] The oxide solid electrolyte according to any one of [1] to [3], in which a proportion of a full width at half maximum of a peak in which a chemical shift appears in a range of -100 to +100 ppm in a spectrum obtained in a case where a solid $^7$Li-NMR measurement is carried out at 120°C is 70% or less with respect to a full width at half maximum of a peak in which a chemical shift appears in a range of -100 to +100 ppm in a spectrum obtained in a case where the solid $^7$Li-NMR measurement is carried out at 20°C.

[5] The oxide solid electrolyte according to any one of [1] to [4], in which a coefficient of determination is 0.9400 or more, where the coefficient of determination is obtained by carrying out a linear regression analysis according to a least squares method in a wave number range of 600 to 850 cm$^{-1}$ in a Raman spectrum.

[6] The oxide solid electrolyte according to any one of [1] to [5], in which a bulk elastic modulus measured by an ultrasonic attenuation method is 45 GPa or less.

[7] The oxide solid electrolyte according to any one of [1] to [6], in which the X includes at least one selected from the group consisting of F, Cl, Br, I, Se, Te, and H and at least one selected from the group consisting of C, P, S, and N.

[8] A binder that is represented by General Formula (I) described later.

[9] The binder according to [8], in which the oxide solid electrolyte satisfies the following requirements 1-1 and 1-2 described later.

[10] The binder, in which the binder contains Li, B, O, and X, and satisfies the following requirements A-1 and A-2 described later,

where X represents at least one kind of element selected from the group consisting of F, Cl, Br, I, S, N, H, Se, Te, C, P, Si, Al, Ga, In, Ge, As, Sb, and Sn.

[11] The binder according to any one of [8] to [10], in which a proportion of a full width at half maximum of a peak in which a chemical shift appears in a range of -100 to +100 ppm in a spectrum obtained in a case where a solid $^{7}$Li-NMR measurement is carried out at 120°C is 70% or less with respect to a full width at half maximum of a peak in which a chemical shift appears in a range of -100 to +100 ppm in a spectrum obtained in a case where the solid $^{7}$Li-NMR measurement is carried out at 20°C.

[12] The binder according to any one of [8] to [11], in which a coefficient of determination is 0.9400 or more, where the coefficient of determination is obtained by carrying out a linear regression analysis according to a least squares method in a wave number range of 600 to 850 cm$^{-1}$ in a Raman spectrum.

[13] The binder according to any one of [8] to [12], in which a bulk elastic modulus measured by an ultrasonic attenuation method is 45 GPa or less.

[14] The binder according to any one of [8] to [13], in which the X includes at least one selected from the group consisting of F, Cl, Br, I, Se, Te, and H and at least one selected from the group consisting of C, P, S, and N.

[15] A solid electrolyte layer that is located between a positive electrode and a negative electrode and contains the oxide solid electrolyte according to any one of [1] to [7].

[16] An active material that is an active material for an all-solid state secondary battery, in which at least a part of a surface of the active material is coated with a coating layer containing the oxide solid electrolyte according to any one of [1] to [7].

[17] An electrode for an all-solid state secondary battery, comprising:

an active material layer containing an active material and at least one selected from the group consisting of the oxide solid electrolyte according to any one of [1] to [7] and the binder according to any one of [8] to [14]; and
a collector.

[18] An electrode for an all-solid state secondary battery, comprising:

an active material layer containing the active material for an all-solid state secondary battery according to [16]; and
a collector.

[19] An all-solid state secondary battery comprising:

a positive electrode,
a negative electrode; and
a solid electrolyte layer that is located between the positive electrode and the negative electrode,
in which at least one of the positive electrode, the negative electrode, or the solid electrolyte layer contains at least one selected from the group consisting of the oxide solid electrolyte according to any one of [1] to [7] and the binder according to any one of [8] to [14].

[20] The all-solid state secondary battery according to [19], in which the solid electrolyte layer is the solid electrolyte layer according to [15].

[21] The all-solid state secondary battery according to [19] or [20], in which at least one of the positive electrode or the negative electrode is the electrode for an all-solid state secondary battery according to [17] or [18].

According to the present invention, it is possible to provide an oxide solid electrolyte that is more excellent in ionic conductivity.

In addition, according to the present invention, it is also possible to provide a binder, a solid electrolyte layer, an active material, an electrode, and an all-solid state secondary battery.

## BRIEF DESCRIPTION OF THE DRAWINGS

Fig. 1 is a graph showing an example of a reduced two-body distribution function G(r) obtained by an X-ray total scattering measurement of an oxide solid electrolyte according to the present invention.
Fig. 2 is a graph showing an example of the X-ray total scattering profile of the oxide solid electrolyte according to the present invention.
Fig. 3 is a graph showing an example of a structural factor S(Q) based on the X-ray total scattering profile obtained in Fig. 2.
Fig. 4 is a view showing an example of a spectrum obtained in a case where a solid $^7$Li-NMR measurement of the oxide solid electrolyte according to the present invention is carried out at 20°C or 120°C.
Fig. 5 is a view showing an example of a spectrum obtained in a case where a solid $^7$Li-NMR measurement of a lithium tetraborate crystal is carried out at 20°C or 120°C.
Fig. 6 is a graph showing an example of a Raman spectrum of the oxide solid electrolyte according to the present invention.
Fig. 7 is a graph showing a Raman spectrum of a general lithium tetraborate crystal.
Fig. 8 is a cross-sectional view illustrating an example of a configuration of an all-solid state secondary battery according to the present invention.
Fig. 9 is a graph showing a reduced two-body distribution function G(r) of an LBO powder of Comparative Example 1, obtained by an X-ray total scattering measurement.
Fig. 10 is a graph showing an example of an X-ray diffraction pattern for explaining a requirement 3.
Fig. 11 is a graph showing an X-ray diffraction pattern of the LBO powder of Comparative Example 1.
Fig. 12 is a graph showing an X-ray diffraction pattern of an oxide solid electrolyte of Example 2.

## DESCRIPTION OF THE PREFERRED EMBODIMENTS

Hereinafter, the present invention will be described in detail.
A numerical value range represented using "to" in the present specification means a range including the numerical values described before and after "to" as the lower limit and the upper limit respectively.
In the present specification, the notation of a compound (for example, in a case where a compound is referred to as an expression with "compound" added to the end) is used so that the meaning of the compound includes not only the compound itself but also a salt or an ion thereof. In addition, the notation of a compound is used so that the meaning of the compound includes a derivative obtained by modifying a part of the compound, for example, by introducing a substituent into the compound within a range where the effect of the present invention is not impaired.

[Oxide solid electrolyte (according to first embodiment)]

An oxide solid electrolyte according to a first embodiment of the present invention includes the following oxide solid electrolyte.
The oxide solid electrolyte according to the present embodiment is represented by General Formula (I).

$$A_a B_b O_c X_d \ldots \qquad (I)$$

In General Formula (I), A represents at least one selected from the group consisting of Li and Na.
X represents at least one selected from the group consisting of F, Cl, Br, I, S, N, H, Se, Te, C, P, Si, Al, Ga, In, Ge, As, Sb, and Sn.

a represents the number of moles of each element represented by A and satisfies $1.75 < a < 2.45$.
b satisfies $3.75 < b < 4.25$.
c satisfies $6.50 < c < 10.00$.
d represents a total number of moles of elements represented by X and satisfies $0 < d < 0.50$.

The oxide solid electrolyte according to the present embodiment contains an element represented by A (hereinafter, also referred to as an "element A"), B, and O, and further contains an element represented by X (hereinafter, also referred to as an "element A").

The inventors of the present invention found that in a case where the oxide solid electrolyte contains a predetermined amount of each of the element A, B, and O, and contains a predetermined amount of the element X, an excellent effect of improving ionic conductivity is exhibited.

Hereinafter, the oxide solid electrolyte according to the present embodiment, which is represented by General Formula (I), is also described as the "first specific solid electrolyte".

The element composition of the first specific solid electrolyte will be described.

The element A is at least one selected from the group consisting of a lithium element (Li) and a sodium element (Na). Among them, the element A is preferably Li from the viewpoint that the ionic conductivity is more excellent (hereinafter, also referred to as "from the viewpoint that the effect of the present invention is more excellent").

From the viewpoint that the effect of the present invention is more excellent, $a$ preferably satisfies $1.75 < a < 2.25$ and more preferably satisfies $1.90 < a < 2.10$.

$b$ represents the number of moles of the boron element (B). $b$ preferably satisfies $3.90 < b < 4.10$ and more preferably satisfies $b = 4.00$.

$c$ represents the number of moles of the oxygen element (O). $c$ preferably satisfies $6.50 < c < 10.00$ and more preferably satisfies $7.00 < c < 9.80$.

The element X is at least one element selected from the group consisting of a fluorine element (F), a chlorine element (Cl), a bromine element (Br), an iodine element (I), a sulfur element (S), a nitrogen element (N), a hydrogen element (H), a selenium element (Se), a tellurium element (Te), a carbon element (C), a (phosphorus element (P), a silicon element (Si), an aluminum element (Al), a gallium element (Ga), an indium element (In), a germanium element (Ge), an arsenic element (As), an antimony element (Sb), and a tin element (Sn).

The first specific solid electrolyte may contain only one kind of element X or may contain two or more kinds of elements X.

$d$ represents the total number of moles of the element X. $d$ preferably satisfies $0 < d < 0.40$, and more preferably $0 < d < 0.20$.

The first specific solid electrolyte preferably contains at least F, Cl, Br, I, S, N, Se, or Te as the element X.

In a case where the first specific solid electrolyte contains only one kind of element X, the element X is preferably F, Cl, or I, more preferably Cl or I, and still more preferably I.

In a case where the first specific solid electrolyte contains two or more kinds of elements X, the element X preferably includes at least one selected from the group consisting of F, Cl, Br, I, Se, Te, and H, and at least one selected from the group consisting of C, P, S, and N, and the element X more preferably includes at least one selected from the group consisting of F, Cl, and I, and at least one selected from the group consisting of S and N.

Among the above, in a case where the first specific solid electrolyte includes two or more kinds of elements X, an aspect in which the element X includes F and at least one selected from the group consisting of S and N is still more preferable, and an aspect in which the element X includes F, S, and N is particularly preferable.

The kind and content of each element contained in the first specific solid electrolyte can be specified by carrying out a known element analysis. The element analysis of the first specific solid electrolyte may be carried out by different methods depending on the characteristics of each element. Regarding methods for element analysis, for example, Li, Na, and B are analyzed according to inductively coupled plasma optical emission spectrometry (ICP-OES), and among X's, N is analyzed according to an inert gas melting method, F, Cl, Br, I and S are analyzed according to combustion ion chromatography (combustion ion chromatography (IC)), and Se and Te are analyzed according to ICP-OES. The content of O is calculated as a difference between an amount obtained by adding together analytical masses of elements other than O, and the total amount of the powder.

The first specific solid electrolyte may be a compound obtained by doping a compound composed of Li, B, and O with at least one kind of element X. Examples of the compound composed of Li, B, and O include a lithium tetraborate compound described later. The element with which the first specific solid electrolyte is doped is not particularly limited as long as it is the element described as the element X; however, it is preferably the element X mentioned as the above-described preferred aspect.

The manufacturing method for the doped compound is not particularly limited, and examples thereof include a manufacturing method including a step of subjecting a lithium tetraborate compound to a mechanical milling treatment in the presence of a specific element source described later.

It is noted that in the present specification, the notation of "solid electrolyte" means a solid compound having a function of migrating ions inside the solid electrolyte. The shape and size of the solid electrolyte (including the first specific solid electrolyte and a second specific solid electrolyte described later) are not limited as long as the above-described function is provided.

Hereinafter, in the description of each embodiment according to the present invention, a case where the lithium ion is a charge carrier responsible for the exchange and migration of charges may be described as an example. However, the charge carrier is limited to the lithium ion, and it may be a sodium ion, a magnesium ion, an aluminum ion, a potassium ion, a hydrogen ion, an oxygen ion, or a fluorine ion.

[Physical properties]

<Requirement 1-1 and requirement 1-2>

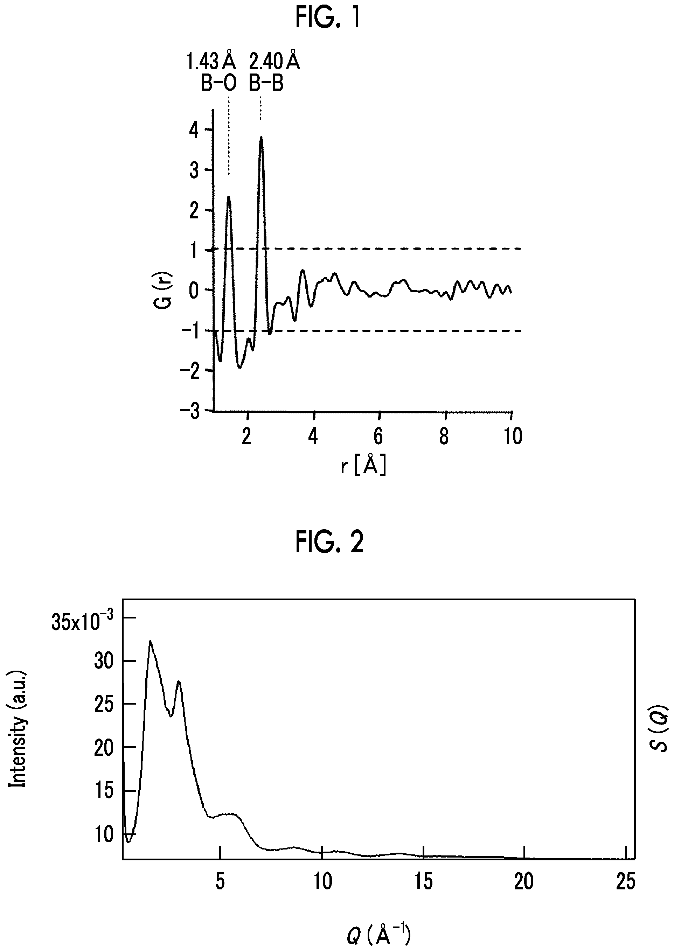

The first specific solid electrolyte preferably satisfies the following requirement 1-1 and requirement 1-2.
The requirement 1-1: In a reduced two-body distribution function G(r) of the first specific solid electrolyte obtained from an X-ray total scattering measurement, a first peak of which a peak top is located in a range where r is 1.43 ± 0.2 Å and a second peak of which a peak top is located in a range where r is 2.40 ± 0.2 Å are present, and G(r) of the peak top of the first peak and G(r) of the peak top of the second peak indicate more than 1.0.
The requirement 1-2: In the reduced two-body distribution function G(r) of the first specific solid electrolyte obtained from an X-ray total scattering measurement, an absolute value of G(r) is less than 1.0 in a range where r is more than 5 Å and 10 Å or less.
Hereinafter, the requirement 1-1 and the requirement 1-2 will be described with reference to Fig. 1.
Fig. 1 is a graph showing an example of a reduced two-body distribution function G(r) obtained by an X-ray total scattering measurement of a first specific solid electrolyte. The vertical axis of Fig. 1 is a reduced two-body distribution function obtained by subjecting X-ray scattering to Fourier transform, and it indicates the probability that an atom is present at a position of a distance r.
The X-ray total scattering measurement is carried out with SPring-8 BL04B2 (acceleration voltage: 61.4 keV, wavelength: 0.2019 Å).
It is noted that the reduced two-body distribution function G(r) is obtained by converting the scattering intensity I, which is obtained experimentally, according to the following procedure.
First, the scattering intensity $I_{obs}$ is represented by Expression (1). In addition, the structural factor S(Q) is obtained by dividing $I_{coh}$ by the product of the number of atoms N and the atomic scattering factor f.

$$I_{obs} = I_{coh} + I_{incoh} + I_{fluorescence} \quad \cdots\cdots (1)$$

$$S(Q) = \frac{I_{coh}}{Nf^2} \qquad (2)$$

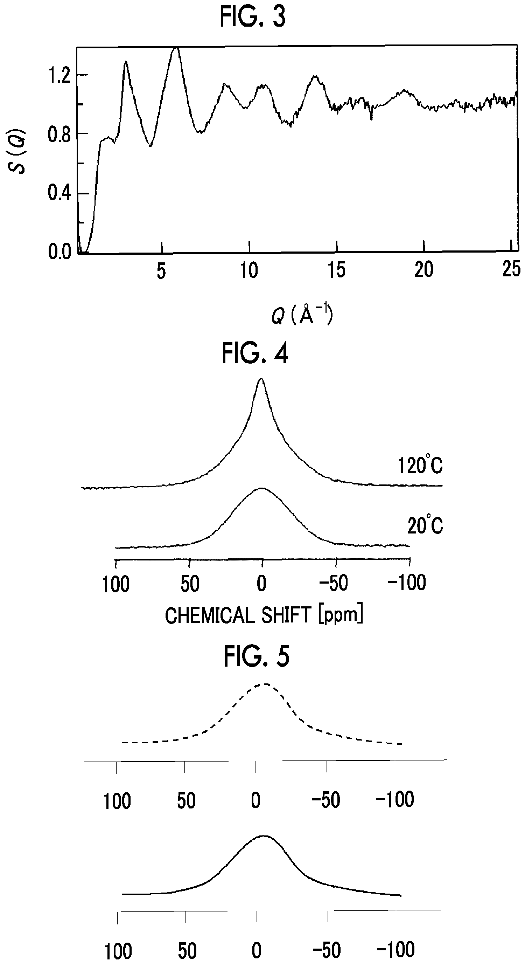

It is necessary to use the structural factor S(Q) for the pair distribution function (PDF) analysis. In Expression (2), the required intensity is solely the coherent scattering $I_{coh}$. Incoherent scattering $I_{incoh}$ and the X-ray fluorescence $I_{fluorescence}$ can be subtracted from the scattering intensity $I_{obs}$ by a blank measurement, subtraction using a theoretical expression, and a discriminator of a detector. Fig. 2 and Fig. 3 are graphs showing an example of the results of the total scattering measurement of the first specific solid electrolyte and the extracted structural factor S(Q), respectively.
The coherent scattering is represented by Debye's scattering Expression (3) (N: total number of atoms, f: atomic scattering factor, $r_{ij}$: interatomic distance between i and j).

$$I_{coh} = \sum_{j=1}^{N} \sum_{k=1}^{N} f_i f_j \frac{\sin Q r_{ij}}{Q r_{ij}} \qquad (3)$$

In a case of focusing on any atom, and the atomic density at a distance r is denoted as $\rho(r)$, the number of atoms present inside a sphere having a radius of r to r + d(r) is $4\pi r^2 \rho(r)dr$, and thus Expression (3) is represented by Expression (4).

$$I_{coh} = Nf^2 \left[ 1 + 4\pi \int_0^\infty r^2 \rho(r) \frac{\sin Q r}{Q r} dr \right] \qquad (4)$$

In a case where the average density of atoms is denoted as $\rho_0$, and Expression (4) is modified, Expression (5) is obtained.

$$\frac{I_{coh}}{N} = f^2 \left[ 1 + 4\pi \int_0^\infty r^2 (\rho(r) - \rho_0) \frac{\sin Qr}{Qr} \right] \qquad (5)$$

Expression (6) is obtained from Expression (5) and Expression (2).

$$4\pi r^2 \rho(r) = 4\pi r^2 \rho_0 + \frac{2r}{\pi} \int_0^\infty Q[S(Q) - 1]\sin Qr dQ) \qquad (6)$$

The two-body distribution function g(r) is represented by Expression (7).

$$g(r) = \frac{\rho_r}{\rho_0} \qquad (7)$$

Expression (8) is obtained from Expression (6) and Expression (7).

$$g(r) = 1 + \frac{1}{2\pi^2 \rho_0 r} \int_0^\infty Q[S(Q) - 1]\sin Qr dQ \qquad (8)$$

As described above, the two-body distribution function can be determined by the Fourier transform of the structural factor S(Q). The reduced two-body distribution function (Fig. 1) is obtained by converting the two-body distribution function to G(r) = 4πr (g(r) -1) in order to make it easier to observe the intermediate/long-distance order. The g(r) that oscillates around 0 represents the density difference from the average density at each interatomic distance, and it is larger than the average density of 1 in a case where there is a correlation at a specific interatomic distance. As a result, it reflects the distance and coordination number of the element corresponding to the local to intermediate distance. In a case where the order is lost, ρ(r) approaches the average density, and thus g(r) approaches 1. As a result, as r is larger, the order is further lost, and thus in the noncrystalline structure, g(r) is 1, that is, G(r) is 0.

In a case the requirement 1-1 is satisfied, in the reduced two-body distribution function G(r) obtained from the X-ray total scattering measurement, a first peak P1 of which a peak top is located in a range where r is 1.43 ± 0.2 Å and a second peak P2 of which a peak top is located in a range where r is 2.40 ± 0.2 Å are present, and G(r) of the peak top of the first peak P1 and G(r) of the peak top of the second peak P2 indicates more than 1.0, as shown in Fig. 1.

That is, in the reduced two-body distribution function G(r) of the first specific solid electrolyte obtained from the X-ray total scattering measurement, the first peak in which G(r) of a peak top (hereinafter, also referred to as a "first peak top") indicates more than 1.0 and the first peak top is located in a range of 1.43 ± 0.2 Å and the second peak in which G(r) of a peak top (hereinafter, also referred to as a "second peak top") indicates more than 1.0 and the second peak top is located in a range of 2.40 ± 0.2 Å are observed.

It is noted that in Fig. 1, the peak top of the first peak P1 is located at 1.43 Å, and the peak top of the second peak P2 is located at 2.40 Å.

At the position of 1.43 Å, a peak attributed to the interatomic distance of boron (B) - oxygen (O) is present. In addition, at the position of 2.40 Å, a peak attributed to the interatomic distance of boron (B) - boron (B) is present. That is, the fact that the above two peaks (the first peak and the second peak) are observed means that periodic structures corresponding to the above two interatomic distances are present in the first specific solid electrolyte.

In addition, in a case where the requirement 1-2 is satisfied, in a range where r is more than 5 Å and 10 Å or less, the absolute value of G(r) is less than 1.0 (corresponding to a range sandwiched between two broken lines) as shown in Fig. 1.

The fact that the absolute value of G(r) is less than 1.0 in a range where r is more than 5 Å and 10 Å or less as described above means that almost no long-distance ordered structure is not present in the first specific solid electrolyte.

Such a first specific solid electrolyte that satisfies the above requirements 1-1 and 1-2 has a short-distance ordered structure related to the interatomic distances of B-O and B-B as described above; however, it has almost no long-distance ordered structure related thereto. Therefore, the first specific solid electrolyte itself is softer than the lithium-containing oxide in the related art and exhibits an elastic characteristic of being easily plastically deformed. As a result, in a molded body of the first specific solid electrolyte formed by the pressurization treatment or the like, the adhesiveness between the first specific solid electrolytes and/or the adhesiveness between the first specific solid electrolyte and another ion conductor is improved, and the interface resistance can be reduced, whereby it is presumed that more excellent ionic conductivity can be obtained.

It is noted that in the reduced two-body distribution function G(r), there may be a peak other than the first peak and the second peak in a range where r is 5 Å or less.

<Solid $^7$Li-NMR spectral characteristics>

From the viewpoint that the effect of the present invention is more excellent, in the first specific solid electrolyte, The proportion of full width at half maximum obtained by carrying out a solid $^7$Li-NMR measurement of the first specific solid electrolyte at 20°C and 120°C and carrying out calculation from an obtained spectrum according to the following method is preferably 70% or less and more preferably 50% or less. The lower limit thereof is not particularly limited; however, it is 10% or more in a large number of cases.

The above-described proportion of full width at half maximum is obtained by carrying out a solid $^7$Li-NMR measurement of the first specific solid electrolyte at each of 20°C and 120°C, determining a full width at half maximum (full width at half maximum 1) of a peak in which the chemical shift appears in a range of -100 to +100 ppm in a spectrum obtained by a measurement at 20°C, and a full width at half maximum (full width at half maximum 2) of a peak in which the chemical shift appears in a range of -100 to +100 ppm in a spectrum obtained by a measurement at 120°C, and then calculating a percentage of a proportion of the full width at half maximum 2 to the full width at half maximum 1 {(full width at half maximum 2/full width at half maximum 1) $\times$ 100}.

The full width at half maximum (FWHM) of the peak means the width (ppm) at a point (H/2) of 1/2 of the height (H) of the peak.

Hereinafter, the above characteristics will be described with reference to Fig. 4.

Fig. 4 is a view showing an example of a spectrum obtained in a case where a solid $^7$Li-NMR measurement of the first specific solid electrolyte is carried out at 20°C or 120°C.

The spectrum shown on the lower side by the solid line in Fig. 4 is a spectrum obtained in a case where the solid $^7$Li-NMR measurement has been carried out at 20°C, and the spectrum shown on the upper side by the broken line in Fig. 4 is a spectrum obtained in a case where the solid $^7$Li-NMR measurement has been carried out at 120°C.

Generally, in the solid $^7$Li-NMR measurement, in a case where the mobility of Li$^+$ is high, the peak that is obtained is a sharper peak. In the aspect shown in Fig. 4, in a case where the spectrum at 20°C and the spectrum at 120°C are compared, the spectrum at 120°C is sharper. That is, in the aspect shown in Fig. 4, it is shown that the mobility of Li$^+$ is high due to the presence of Li defects. It is conceived that such a first specific solid electrolyte is more excellent in the effect of the present invention since it is easily plastically deformed due to the defective structure as described above and the hopping property of Li$^+$ is excellent.

It is noted that in a case where a general lithium tetraborate crystal is subjected to the solid $^7$Li-NMR measurement at 20°C or 120°C, the spectrum measured at 20°C shown by the solid line, shown on the lower side of Fig. 5, and the spectrum measured at 120°C shown by the broken line, shown on the upper side of Fig. 5 tends to have substantially the same shape. That is, the lithium tetraborate crystal has no Li defects and the like, and as a result, it has a high elastic modulus and is hardly plastically deformed.

The conditions for the above-described solid $^7$Li-NMR measurement are as follows.

Specifically, measurement is carried out by a single pulse method using a 4 mm HX CP-MAS probe, 90° pulse width: 3.2 $\mu$s, observation frequency: 155.546 MHz, observation width: 1,397.6 ppm, repetition time: 15 sec, integration: 1 time, and MAS rotation speed: 0 Hz.

<Raman spectral characteristics>

Further, it is preferable that the first specific solid electrolyte satisfies the following requirement 2 from the viewpoint that the effect of the present invention is more excellent.

The requirement 2: The coefficient of determination obtained by carrying out a linear regression analysis according to a least squares method in a wave number range of 600 to 850 cm$^{-1}$ is 0.9400 or more in a Raman spectrum of the first specific solid electrolyte.

The coefficient of determination in the above requirement 2 is more preferably 0.9600 or more from the viewpoint that the effect of the present invention is still more excellent. The upper limit thereof is not particularly limited; however, it is, for example, 1.0000.

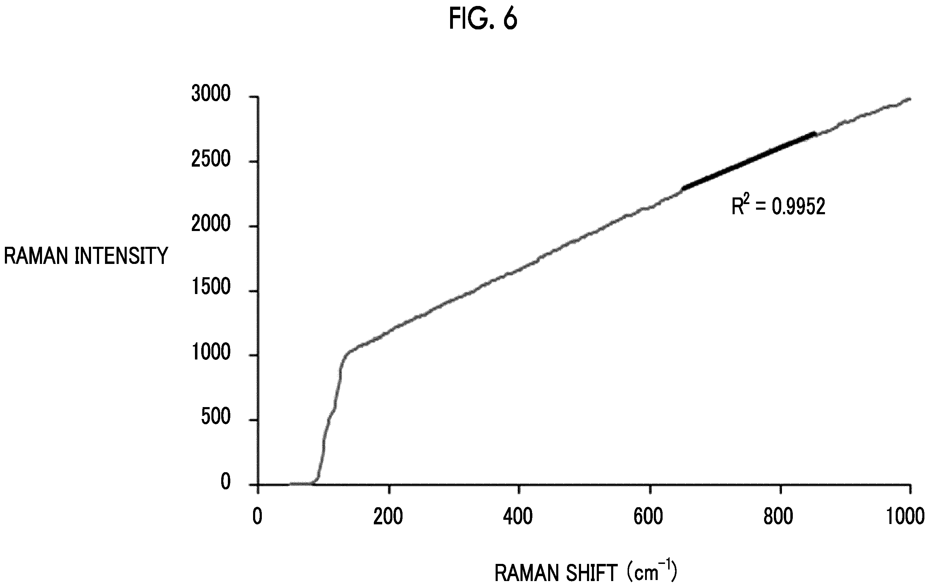

Hereinafter, the requirement 2 will be described with reference to Fig. 6.

Regarding the requirement 2, first, a Raman spectrum of the first specific solid electrolyte is acquired. Raman imaging is carried out as the measuring method for a Raman spectrum. The Raman imaging is a microscopic spectroscopy method that combines Raman spectroscopy with a microscopic technique. Specifically, it is a method of scanning a sample with excitation light to detect measurement light including Raman scattered light, and then visualizing the distribution or the like of components based on the intensity of the measurement light.

The measurement conditions for Raman imaging are as follows: an excitation light of 532 nm, an objective lens of 100 magnifications, a point scanning according to the mapping method, a step of 1 $\mu$m, an exposure time per point of 1 second, the number of times of integration of 1, and a measurement range of a range of 70 $\mu$m $\times$ 50 $\mu$m.

In addition, the Raman spectrum data is subjected to a principal component analysis (PCA) processing to remove noise. Specifically, in the principal component analysis processing, the spectrum is recombined using components having an autocorrelation coefficient of 0.6 or more.

Fig. 6 shows an example of a Raman spectrum of the first specific solid electrolyte.

In the graph shown in Fig. 6, the vertical axis indicates the Raman intensity, and the lateral axis indicates the Raman shift. A coefficient of determination (coefficient of determination $R^2$) obtained by carrying out a linear regression analysis according to the least squares method is calculated in a wave number range of 600 to 850 cm$^{-1}$ of the Raman spectrum shown in Fig. 6. That is, in a wave number range of 600 to 850 cm$^{-1}$ in the Raman spectrum of Fig. 6, a regression line (the thick broken line in Fig. 6) is determined according to the least squares method, and the coefficient of determination $R^2$ of the regression line is calculated. It is noted that as the coefficient of determination, a value between 0 (no linear correlation) and 1 (complete linear correlation of the measured values) is taken according to the linear correlation of the measured values.

In the first specific solid electrolyte, a peak is not substantially observed in a wave number range of 600 to 850 cm$^{-1}$ as shown in Fig. 6, and as a result, a high coefficient of determination is exhibited.

It is noted that the coefficient of determination $R^2$ corresponds to the square of the correlation coefficient (Pearson's product-moment correlation coefficient). More specifically, in the present specification, the coefficient of determination $R^2$ is calculated according to the following expression. In the expression, $x_1$ and $y_1$ respectively represent a wave number in a Raman spectrum and a Raman intensity corresponding to the wave number, $x_2$ represents the (arithmetic) average of the wave numbers, and $y_2$ represents the (arithmetic) average of the Raman intensities.

$$R^2 = \frac{\left(\sum (x_1 - x_2) \cdot (y_1 - y_2)\right)^2}{\sum (x_1 - x_2)^2 \cdot \sum (y_1 - y_2)^2}$$

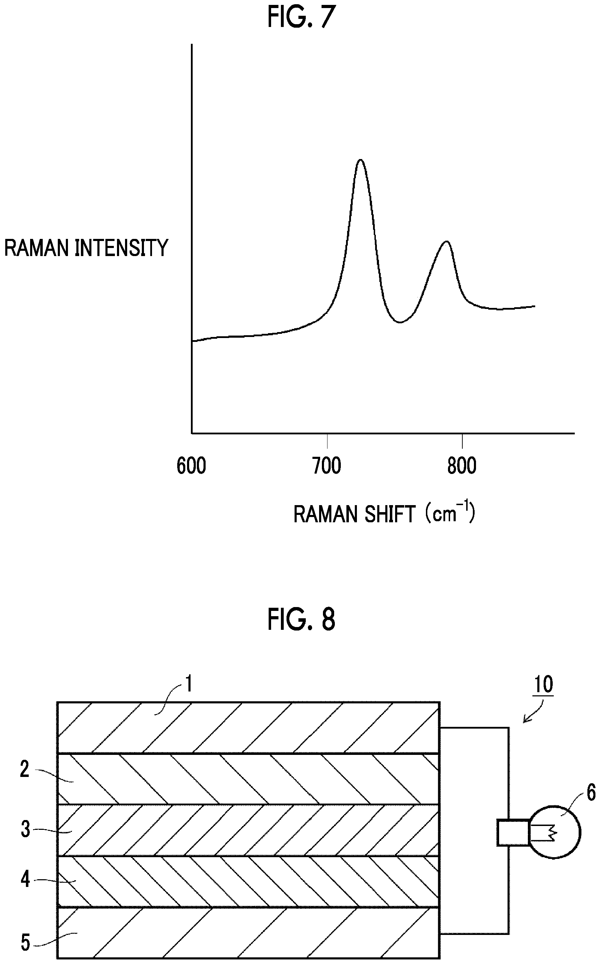

On the other hand, Fig. 7 is a graph showing a Raman spectrum of a general lithium tetraborate crystal. As shown in Fig. 7, in a case of a general lithium tetraborate crystal, peaks are observed in wave number ranges of 716 to 726 cm$^{-1}$ and 771 to 785 cm$^{-1}$ derived from the structure thereof.

In a case where there is such a peak, the coefficient of determination thereof is less than 0.9400 in a case where the coefficient of determination is calculated by carrying out a linear regression analysis according to the least squares method in a wave number range of 600 to 850 cm$^{-1}$.

That is, the fact that the coefficient of determination is 0.9400 or more indicates that the first specific solid electrolyte contains almost no crystal structures contained in a general lithium tetraborate crystal. Therefore, as a result, it is conceived that the first specific solid electrolyte has the characteristic of being easily plastically deformed and a characteristic of being excellent in the hopping property of Li$^+$.

<Bulk elastic modulus>

The bulk elastic modulus of the first specific solid electrolyte is not particularly limited; however, it is preferably 50 GPa or less, more preferably 45 GPa or less, and still more preferably 40 GPa or less, from the viewpoint that the effect of the present invention is more excellent. The lower limit thereof is not particularly limited; however, it is preferably 5 GPa or more.

The bulk elastic modulus is measured according to the ultrasonic attenuation method.

Specifically, first, a suspension in which the first specific solid electrolyte is suspended in pure water is prepared. The content of the first specific solid electrolyte in the suspension is set to 1.2% by mass with respect to the total mass of the suspension. Next, the ultrasonic attenuation spectrum of the suspension is measured, and the bulk elastic modulus of the first specific solid electrolyte is determined from the fitting according to the scattering attenuation theoretical expression. It is noted that in a case where the above fitting is carried out, the particle size distribution, density, and Poisson's ratio of the first specific solid electrolyte are used.

Regarding the fitting according to the above-described scattering attenuation theoretical expression, the bulk elastic modulus is calculated by using the expression (7), the expression (12), and the expression (13) described in Kohjiro Kubo et al., Ultrasonics 62 (2015), pages 186-194.

In addition, the particle size distribution of the first specific solid electrolyte is obtained by acquiring a particle image according to a flow-type particle image analysis method, calculating particle diameters of the first specific solid electrolyte, and creating a histogram (a particle size distribution) of the particle diameters. The particle diameter corresponds to a circle-equivalent diameter.

<X-ray diffraction characteristics>

The first specific solid electrolyte preferably satisfies the following requirement 3.

The requirement 3: In an X-ray diffraction pattern of the first specific solid electrolyte obtained from an X-ray diffraction measurement using a CuKα ray,

in a case where none of a first peak of which a peak top is located, in terms of the diffraction angle 2θ value, in a range of 21.6° to 22.0° and a full width at half maximum is 0.65° or less, a second peak of which a peak top is located in a range of 25.4° to 25.8° and a full width at half maximum is 0.65° or less, a third peak of which a peak top is located in a range of 33.4° to 33.8° and a full width at half maximum is 0.65° or less, and a fourth peak of which a peak top is located in a range of 34.4° to 34.8° and a full width at half maximum is 0.65° or less are present, or in a case where at least one specific peak selected from the group consisting of the first peak, the second peak, the third peak, and the fourth peak is present in the X-ray diffraction pattern, an intensity ratio of at least the one of the specific peak, which is calculated according to the following intensity measuring method, is 5.0 or less.

The intensity measuring method: An average intensity 1 in a range of +0.45° to +0.55° from a diffraction angle 2θ of the peak top of the specific peak is calculated, an average intensity 2 in a range of -0.55° to -0.45° from the diffraction angle 2θ of the peak top of the specific peak is calculated, an arithmetic mean value of the average intensity 1 and the average intensity 2 is calculated, and a ratio of a peak intensity at the peak top of the specific peak to the arithmetic mean value is defined as the intensity ratio.

Hereinafter, the requirement 3 will be described.

First, in an X-ray diffraction pattern of the first specific solid electrolyte obtained from an X-ray diffraction measurement using a CuKα ray, the requirement 3 is satisfied in a case where none of a first peak of which a peak top is located in a range of 21.6° to 22.0° and a full width at half maximum is 0.65° or less, a second peak of which a peak top is located in a range of 25.4° to 25.8° and a full width at half maximum is 0.65° or less, a third peak of which a peak top is located in a range of 33.4° to 33.8° and a full width at half maximum is 0.65° or less, and a fourth peak of which a peak top is located in a range of 34.4° to 34.8° and a full width at half maximum is 0.65° or less are present.

The full width at half maximum (FWHM) of the peak means the width (°) at a point of 1/2 of the intensity of the peak.

In addition, in an X-ray diffraction pattern of the first specific solid electrolyte obtained from an X-ray diffraction measurement using a CuKα ray, in a case where at least one specific peak selected from the group consisting of the first peak, the second peak, the third peak, and the fourth peak is present in the X-ray diffraction pattern, the requirement 3 is satisfied even in a case where an intensity ratio of at least the one of the specific peak, which is calculated according to an intensity measuring method described later, is 5.0 or less.

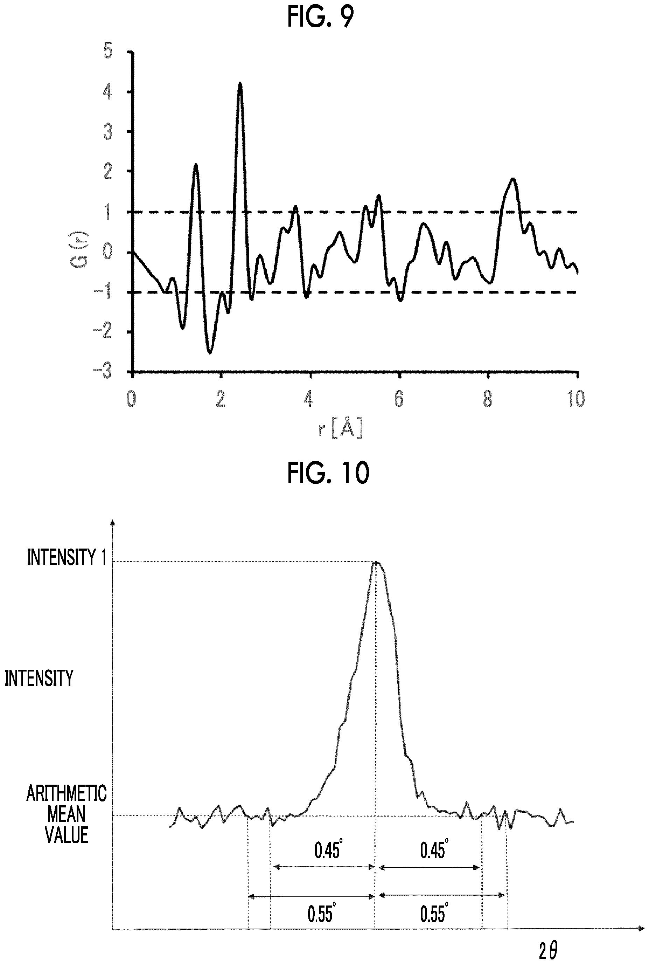

Hereinafter, the intensity measuring method will be described with reference to Fig. 10.

Fig. 10 is a graph showing an example of a specific peak that appears in a diffraction pattern of the first specific solid electrolyte, where the diffraction pattern is obtained from an X-ray diffraction measurement using a CuKα ray. In the diffraction pattern shown in Fig. 10, a specific peak in which the intensity of the peak top exhibits an intensity 1 is shown. In the intensity measuring method, as shown in Fig. 10, an average intensity 1 in a range of +0.45° to +0.55° from the diffraction angle 2θ of the peak top of the specific peak is calculated, and furthermore, an average intensity 2 in a range of -0.55° to -0.45° from the diffraction angle 2θ of the peak top of the specific peak is calculated. Next, the arithmetic mean value of the average intensity 1 and the average intensity 2 is calculated, and the ratio of the intensity 1 to the arithmetic mean value is determined as the intensity ratio.

A case where the requirement 3 is satisfied means that the crystal structure is not present or almost not present in the first specific solid electrolyte, and the lithium-based solid electrolyte is in a noncrystalline state.

That is, the first peak to the fourth peak described in the requirement 3 are peaks mainly derived from the crystal structure (particularly, the crystal structure of lithium tetraborate) in the first specific solid electrolyte, and a case where this peak is not present means that the first specific solid electrolyte does not have a predetermined crystal structure and is in a noncrystalline state. In addition, the fact that the intensity ratio of any one of the existing specific peaks is equal to or smaller than a predetermined value even in a case where at least one of the first peak, the second peak, the third peak, or the fourth peak is present means that such a crystal structure that inhibits the effect of the present invention is almost not present in the first specific solid electrolyte has almost no crystal structure. It is noted that in the first specific solid electrolyte, a peak due to another factor may be generated in addition to the peak derived from a predetermined crystal structure such as the crystal structure of lithium tetraborate mentioned as an example. Examples of the peak due to another factor include a peak derived from a specific component (for example, a lithium salt), and such a peak may overlap with any one of the above-described first peak to fourth peak. However, in a case where a noncrystalline state is achieved, all of the first peak to the fourth peak are reduced in a large number of cases, and even in a case where a peak due to another factor happens to overlap with any one of the first peak to the fourth peak, and thus one large peak appears, it can be said that the presence of at least one specific peak in which the intensity ratio is equal to or smaller than the predetermined value indicates that the first specific solid electrolyte is in a noncrystalline state which is excellent ionic conductivity.

The above-described X-ray diffraction measurement is carried out using a CuK$\alpha$ ray under measurement conditions of 0.01 °/step and 3 °/min.

In the X-ray diffraction pattern of the first specific solid electrolyte obtained from the X-ray diffraction measurement using the CuK$\alpha$ ray, it is preferable that none of the first peak, the second peak, the third peak, and the fourth peak are present, or the intensity ratio of at least one specific peak selected from the group consisting of the first peak, the second peak, the third peak, and the fourth peak are 3.0 or less. Among the above, it is more preferable that none of the first peak, the second peak, the third peak, and the fourth peak are present, or the intensity ratio of at least one specific peak selected from the group consisting of the first peak, the second peak, the third peak, and the fourth peak are 2.0 or less.

<Particle diameter>

The particle diameter of the first specific solid electrolyte is not particularly limited; however, from the viewpoint that the effect of the present invention is more excellent, the median diameter (D50) of the first specific solid electrolyte is preferably 0.01 to 20 $\mu$m and more preferably 0.1 to 2.0 $\mu$m.

The median diameter (D50) is obtained by acquiring a particle image according to a flow-type particle image analysis method, calculating particle diameters of the first specific solid electrolyte, and calculating a particle diameter at which a total of volumes of particles on the large diameter side and the small diameter side is equal in a particle size distribution that is created from the calculated particle diameters. It is noted that the particle diameter corresponds to a circle-equivalent diameter.

<Ion conductivity>

The ion conductivity of the first specific solid electrolyte is not particularly limited; however, it is preferably 1.0 $\times$ 10$^{-6}$ S/cm or more and more preferably 1.0 $\times$ 10$^{-5}$ S/cm or more from the viewpoint of application to various use applications. The upper limit thereof is not particularly limited, and it is 1.0 $\times$ 10$^{-3}$ S/cm or less in a large number of cases.

In the present specification, the ion conductivity of solid electrolyte (the ion conductivity) is measured by the following method. First, two Au electrodes are disposed to sandwich the solid electrolyte (a molded body of the solid electrolyte). The alternating current impedance between the two Au electrodes is measured in a measurement frequency range of 1 Hz to 1 MHz under the conditions of a measurement temperature of 25°C and an applied voltage of 100 mV, and the arc diameter of the obtained Cole-Cole plot (the Nyquist plot) is analyzed to calculate the ion conductivity of the solid electrolyte.

[Oxide solid electrolyte (according to second embodiment)]

An oxide solid electrolyte according to a second embodiment of the present invention includes the following oxide solid electrolyte.

The oxide solid electrolyte according to the present embodiment contains Li, B, O, and X, and satisfies the following requirement A-1 and requirement A-2.

X represents at least one kind of element selected from the group consisting of F, Cl, Br, I, S, N, H, Se, Te, C, P, Si, Al, Ga, In, Ge, As, Sb, and Sn.

The requirement A-1: In a reduced two-body distribution function G(r) of the oxide solid electrolyte obtained from an X-ray total scattering measurement, a first peak of which a peak top is located in a range where r is 1.43 $\pm$ 0.2 Å and a second peak of which a peak top is located in a range where r is 2.40 $\pm$ 0.2 Å are present, and G(r) of the peak top of the first peak and G(r) of the peak top of the second peak indicate more than 1.0.

The requirement A-2: In the reduced two-body distribution function G(r) of the oxide solid electrolyte obtained from an X-ray total scattering measurement, an absolute value of G(r) is less than 1.0 in a range where r is more than 5 Å and 10 Å or less.

The inventors of the present invention found that in a case where the oxide solid electrolyte contains an element X in addition to Li, B, and O and satisfies the above-described requirements A-1 and A-2, an excellent effect of improving ionic conductivity is exhibited.

In a case where the oxide solid electrolyte containing Li, B, O, and the element X satisfies the requirement A-1 and the requirement A-2, the oxide solid electrolyte itself is softer than the lithium-containing oxide in the related art and exhibits an elastic characteristic of being easily plastically deformed, since it has a short-distance ordered structure but not has a long-distance ordered structure related to the interatomic distances of B-O and B-B. As a result, in a molded body of the oxide solid electrolyte formed by the pressurization treatment or the like, the adhesiveness between the oxide solid electrolytes and/or the adhesiveness between the oxide solid electrolyte and another ion conductor is improved, and the interface resistance can be reduced, whereby it is presumed that more excellent ionic conductivity can be obtained.

Hereinafter, the oxide solid electrolyte according to the present embodiment is also described as the "second specific solid electrolyte".

The element composition of the second specific solid electrolyte is not particularly limited as long as the second specific solid electrolyte contains Li, B, O, and the element X and satisfies the requirement A-1 and the requirement A-2.

The element X is at least one selected from the group consisting of F, Cl, Br, I, S, N, H, Se, Te, C, P, Si, Al, Ga, In, Ge, As, Sb, and Sn. The second specific solid electrolyte may contain only one kind of element X or may contain two or more kinds of elements X.

The second specific solid electrolyte preferably contains at least F, Cl, Br, I, S, N, Se, or Te as the element X.

In a case where the second specific solid electrolyte contains only one kind of element X, the element X is preferably F, Cl, or I, more preferably Cl or I, and still more preferably I.

In a case where the second specific solid electrolyte contains two or more kinds of elements X, the element X preferably includes at least one selected from the group consisting of F, Cl, Br, I, Se, Te, and H, and at least one selected from the group consisting of C, P, S, and N, and the element X more preferably includes at least one selected from the group consisting of F, Cl, and I, and at least one selected from the group consisting of S and N.

Among the above, in a case where the second specific solid electrolyte includes two or more kinds of elements X, an aspect in which the element X includes F and at least one selected from the group consisting of S and N is still more preferable, and an aspect in which the element X includes F, S, and N is particularly preferable.

The second specific solid electrolyte is preferably a compound represented by General Formula (II).

$$\text{Li}_a\text{B}_b\text{O}_c\text{X}_d \cdots \qquad \text{(II)}$$

X in General Formula (II) is the above-described element X. a to d represent the number of moles of each element, a satisfies $1.75 < a < 2.45$, b satisfies $3.75 < b < 4.25$, c satisfies $6.50 < c < 10.00$, and d represents a total number of moles of elements represented by X and satisfies $0 < d < 0.50$.

From the viewpoint that the effect of the present invention is more excellent, a preferably satisfies $1.75 < a < 2.25$ and more preferably satisfies $1.90 < a < 2.10$.

b preferably satisfies $3.90 < b < 4.10$ and more preferably satisfies $b = 4.00$.
c preferably satisfies $6.50 < c < 10.00$ and more preferably satisfies $7.00 < c < 9.80$.
d preferably satisfies $0 < d < 0.40$ and more preferably satisfies $0 < d < 0.20$.

The kind and content of each element contained in the second specific solid electrolyte can be specified by the method for element analysis of the first specific solid electrolyte that has already been described.

All of the physical properties and configurations other than the requirement A-1 and the requirement A-2 of the second specific solid electrolyte are the same as those of the first specific solid electrolyte, including the preferred aspects thereof.

Hereinafter, the first specific solid electrolyte and the second specific solid electrolyte will be collectively described without distinguishing them unless otherwise specified. In addition, both the first specific solid electrolyte and the second specific solid electrolyte are also collectively referred to as the "specific solid electrolyte".

[Production method for specific solid electrolyte]

The production method for the specific solid electrolyte is not particularly limited as long as it is a method that makes it possible to obtain a composite oxide having the composition represented by General Formula (I) and exhibiting the above-described characteristics.

Among the above, from the viewpoint that the specific solid electrolyte can be produced with high productivity, it is preferably a production method including a step of subjecting a lithium tetraborate compound to a mechanical milling treatment in the presence of an element source containing at least one kind of element X (hereinafter, also referred to as a "specific element source")

The lithium tetraborate compound is a compound represented by $Li_2B_4O_7$ and is composed of Li, B, and O; however, it may deviate from the above standard value. More specifically, the lithium tetraborate serving as a raw material of the specific solid electrolyte is preferably a compound represented by $Li_{2+x}B_{4+y}O_{7+z}$ (-0.3 < x < 0.3, -0.3 < y < 0.3, and -0.3 < z < 0.3).

In addition, the lithium tetraborate compound is preferably a lithium tetraborate crystal (LBO crystal). The LBO crystal means a crystal of the lithium tetraborate compound, in which an XRD pattern attributable to the space group l41cd is observed in a case where XRD measurement has been carried out.

The specific element source includes at least one kind of element X. The specific element source may be composed of one kind of compound containing the element X or may be composed of two or more kinds of compounds. The specific element source preferably contains at least one of the above-described preferred elements X's.

The specific element source is preferably a salt and more preferably a lithium salt.

Examples of the lithium salt include $LiN(SO_2F)_2$ (lithium bisfluorosulfonylimide, LiFSI), LiI, LiCl, and LiF.

The using amount of the specific element source is not particularly limited, and the using amount is appropriately adjusted so that the specific solid electrolyte is obtained.

Among the above, the using amount of the specific element source is preferably 1 to 40 parts by mass and more preferably 5 to 20 parts by mass with respect to 100 parts by mass of the lithium tetraborate compound.

The mechanical milling treatment is a treatment of pulverizing a sample while applying mechanical energy.

Examples of the mechanical milling treatment include ball milling, vibration milling, turbo milling, and disc milling, where ball milling is preferable since the specific solid electrolyte can be produced with high productivity. Examples of the ball milling include vibration ball milling, rotary ball milling, and planetary ball milling, where planetary ball milling is more preferable.

As the conditions for ball milling treatment, the optimum conditions are selected depending on the raw materials to be used.

The material of the pulverization balls (the media) to be used at the time of ball milling is not particularly limited. However, examples thereof include agate, silicon nitride, zirconia, alumina, and an iron-based alloy, where zirconia is preferable from the viewpoint that the specific solid electrolyte can be produced with high productivity.

The average particle diameter of the pulverization balls is not particularly limited; however, it is preferably 1 to 10 mm and more preferably 3 to 7 mm from the viewpoint that the specific solid electrolyte can be produced with high productivity. The average particle diameter is a value obtained by measuring the diameters of any 50 pulverization balls and arithmetically averaging them. In a case where the pulverization ball is not spherical, the major axis shall be taken as the diameter.

The number of pulverization balls used at the time of ball milling is not particularly limited; however, it is preferably 10 to 100 and more preferably 40 to 60 from the viewpoint that the specific solid electrolyte can be produced with high productivity.

The material of the pulverization pot to be used at the time of ball milling is not particularly limited. However, examples thereof include agate, silicon nitride, zirconia, alumina, and an iron-based alloy, where zirconia is preferable from the viewpoint that the specific solid electrolyte can be produced with high productivity.

The rotation speed in a case of carrying out ball milling is not particularly limited; however, it is preferably 200 to 700 rpm and more preferably 350 to 550 rpm from the viewpoint that the specific solid electrolyte can be produced with high productivity.

The treatment time of ball milling is not particularly limited; however, it is preferably 10 to 200 hours and more preferably 20 to 140 hours from the viewpoint that the specific solid electrolyte can be produced with high productivity.

The atmosphere in a case of carrying out ball milling may be an atmosphere of atmospheric air or may be an atmosphere of an inert gas (for example, argon, helium, or nitrogen).

A production method for the specific solid electrolyte is preferably a production method having the following steps 1, 2 and 3 from the viewpoint of excellent mixing of additives.

Step 1: A step of subjecting lithium tetraborate crystals to a mechanical milling treatment.

Step 2: A step of adding a specific element source to the finely processed lithium tetraborate compound obtained in the step 1.

Step 3: A step of further subjecting the lithium tetraborate compound to a mechanical milling treatment in the presence of the specific element source.

Preferred conditions for the mechanical milling treatment in the step 1 and the step 3 are the same as the above-described conditions except for the treatment time.

In a case where the mechanical milling treatment is carried out using a ball mill in the step 1 and the step 3, the treatment time of the ball mill is not particularly limited. However, from the viewpoint that the specific solid electrolyte can be produced with high productivity, it is preferably 0.5 to 100 hours and more preferably 2 to 50 hours in the step 1, and it is preferably 0.5 to 100 hours and more preferably 2 to 50 hours in the step 3.

In the step 2, the specific element source may be added once or may be dividedly added a plurality of times while carrying out the mechanical milling treatment.

[Molded body of specific solid electrolyte]

A molded body of the specific solid electrolyte (hereinafter, also referred to as a "specific molded body") is formed of the above-described specific solid electrolyte.

A forming method for the specific molded body is not particularly limited; however, examples thereof include a method of subjecting the specific solid electrolyte to a pressurization treatment to form a molded body. That is, it is preferable that the specific molded body is formed by subjecting the specific solid electrolyte to a pressurization treatment (pressure molding treatment).

Hereinafter, a method for the pressurization treatment will be described in detail.

The method for pressurization treatment is not particularly limited, and examples thereof include a method using a known press device.

The pressurizing force at the time of the pressurization treatment is not particularly limited, and the optimum pressure is selected depending on the components in the specific solid electrolyte; however, it is preferably 5 to 1,500 MPa and more preferably 10 to 600 MPa from the viewpoint that the effect of the present invention is more excellent.

The time of the pressurization treatment is not particularly limited; however, it is preferably 0.01 to 0.5 hours and more preferably 0.1 to 0.2 hours from the viewpoint that the effect of the present invention is more excellent and the viewpoint of productivity.

Further, a heating treatment may be carried out at the time of the pressurization treatment. The heating temperature at the time of the heating treatment is not particularly limited; however, it is preferably 40°C to 400°C and more preferably 200°C to 350°C. The heating time at the time of the heating treatment is preferably 1 minute to 6 hours.

The atmosphere during the pressurization is not particularly limited, and examples thereof include an atmosphere of atmospheric air, an atmosphere of dried air (the dew point: -20°C or lower), and an atmosphere of inert gas (for example, argon, helium, or nitrogen).

The specific molded body may be a composite body containing the specific solid electrolyte and other components other than the specific solid electrolyte. Examples of the other components contained in the specific molded body include a lithium compound having an ion conductivity at 25°C of $1.0 \times 10^{-6}$ S/cm or more (hereinafter, also referred to as a "second lithium compound") and a binder.

The specific molded body preferably contains the second lithium compound. This is because the in a case where the specific molded body contains the second lithium compound, the ionic conductivity of the specific molded body is further improved.

The kind of the second lithium compound is not particularly limited, and it suffices that the ion conductivity is $1.0 \times 10^{-6}$ S/cm or more at 25°C. The ion conductivity of the second lithium compound is preferably $1.0 \times 10^{-5}$ S/cm or more at 25°C. The upper limit thereof is not particularly limited, and it is $1.0 \times 10^{-3}$ S/cm or less in a large number of cases.

The ion conductivity of the second lithium compound can be measured according to the above-described measuring method for the ion conductivity of the solid electrolyte.

Examples of the second lithium compound include the following compounds 1 to 9.

Compound 1: A lithium compound having a garnet-type structure or a garnet-type similar structure containing at least Li, La, Zr, and O

Compound 2: A lithium compound having a perovskite-type structure, containing at least Li, Ti, La, and O

Compound 3: A lithium compound having a NASICON-type structure, containing at least Li, $M^1$, P, and O, where $M^1$ represents at least one of Ti, Zr, Si, or Ge

Compound 4: A lithium compound having an amorphous-type structure, containing at least Li, P, O, and N

Compound 5: A lithium compound having a monoclinic structure, containing at least Li, Si, and O

Compound 6: A lithium compound having an olivine-type structure represented by $LiM^2X^1O_4$, where $M^2$ represents a divalent element or a trivalent element, $X^1$ represents a pentavalent element in a case where $M^2$ represents a divalent element, and $X^1$ represents a tetravalent element in a case where $M^2$ represents a trivalent element

Examples of the divalent element represented by $M^2$ include Mg, Ca, Sr, Ba, and Zn, and examples of the trivalent element represented by $M^2$ include Al, Ga, In, Sc, Nd, and Tm. Further, examples of the pentavalent element represented by $X^1$ include P, As, and Sb, and examples of the tetravalent element represented by $X^1$ include Si and Ge.

Compound 7: A lithium compound having an antiperovskite structure, containing at least Li, O, and $X^2$, where $X^2$ represents at least one of Cl, Br, or N

Compound 8: A lithium compound having a spinel structure, represented by $Li_2M^3Y_4$, where $M^3$ represents at least one of Cd, Mg, Mn, or V, and Y represents at least one of F, Cl, Br, or I.

Compound 9: A lithium compound having a β-alumina structure.

The bulk elastic modulus of the second lithium compound is not particularly limited; however, it is preferably 50 to 300 GPa and more preferably 60 to 200 GPa from the viewpoint that the effect of the present invention is more excellent.

The measuring method for the bulk elastic modulus is the same as the measuring method for the bulk elastic modulus of the specific solid electrolyte.

The average particle diameter of the second lithium compound is not particularly limited; however, it is preferably 0.1 to 100 μm and more preferably 1 to 20 μm from the viewpoint that the effect of the present invention is more excellent.

The measuring method for the average particle diameter is the same as the measuring method for the average particle diameter of the specific solid electrolyte.

The second lithium compound may be produced by a known method, or a commercially available product may be used.

The content of the second lithium compound in the specific molded body is not particularly limited; however, it is preferably 50% to 99% by mass and more preferably 80% to 98% by mass with respect to the total mass of the specific molded body from the viewpoint that the effect of the present invention is more excellent and the viewpoint that the plastic deformation of the specific molded body is easier.

The mixing ratio between the specific solid electrolyte and the second lithium compound in the specific molded body is not particularly limited. However, from the viewpoint that the ion conductivity is more excellent, the mass ratio of the content of the specific solid electrolyte to the content of the second lithium compound (content of specific solid electrolyte/content of second lithium compound) is preferably 1/2 or more and more preferably 4/5 or more.

The specific molded body may include a binder. Examples of the binder include various organic polymeric compounds (polymers).

The organic polymeric compound that constitutes the binder may have a particle shape or may have a non-particle shape. The particle diameter (the volume average particle diameter) of the particle-shaped binder is preferably 10 to 1,000 nm, more preferably 20 to 750 nm, still more preferably 30 to 500 nm, and particularly preferably 50 to 300 nm.

The kind of the binder contained in the specific molded body is not particularly limited, and examples thereof include the following polymers.

Examples of the fluorine-containing polymer include polytetrafluoroethylene, polyvinylene difluoride, and a copolymer of polyvinylene difluoride and hexafluoropropylene.

Examples of the hydrocarbon-based thermoplastic polymer include polyethylene, polypropylene, styrene butadiene rubber, hydrogenated styrene butadiene rubber, butylene rubber, acrylonitrile butadiene rubber, polybutadiene, and polyisoprene.

Examples of the acrylic polymer include various (meth)acrylic monomers, (meth)acrylamide monomers, and copolymers (preferably, a copolymer of acrylic acid and methyl acrylate) of monomers constituting these polymers.

In addition, copolymers with other vinyl monomers are also suitably used. Examples of the copolymers include a copolymer of methyl (meth)acrylate and styrene, a copolymer of methyl (meth)acrylate and acrylonitrile, and a copolymer of butyl (meth)acrylate, acrylonitrile, and styrene.

Examples of other polymers include polyurethane, polyurea, polyamide, polyimide, polyester, polyether, polycarbonate, and a cellulose derivative.

Among them, an acrylic polymer, polyurethane, polyamide, or polyimide is preferable.

As the polymer that constitutes a binder, a polymer synthesized according to a conventional method may be used, or a commercially available product may be used.

One kind of binder may be used singly, or two or more kinds thereof may be used in combination.

In a case where the specific molded body contains a binder, the content of the binder is preferably 0.1% to 3% by mass and more preferably 0.5% to 1% by mass with respect to the total mass of the specific molded body.

The specific molded body may contain another lithium compound in addition to the specific solid electrolyte and the second lithium compound.

The other lithium compound described above is not particularly limited, and examples thereof include the lithium salts described in paragraphs 0082 to 0085 of JP2015-088486A.

In a case where the specific molded body contains a lithium salt, the content of the lithium salt is preferably 0.1% to 3% by mass and more preferably 0.5% to 1% by mass with respect to the total mass of the specific molded body.

In addition, the specific molded body may contain another solid electrolyte in addition to the specific solid electrolyte and the second lithium compound.

The ion conductivity of the specific molded body is not particularly limited; however, it is preferably $1.0 \times 10^{-6}$ S/cm or more and more preferably $1.0 \times 10^{-5}$ S/cm or more from the viewpoint of application to various use applications.

The measuring method for the ion conductivity of the specific molded body is the same as the measuring method for the ion conductivity of the specific solid electrolyte.

[Use application]

The above-described specific solid electrolyte can be used in various use applications.

For example, it can be used in, for example, various batteries (for example, an all-solid state secondary battery, a solid-state oxide-type fuel cell, and a battery using solid oxide water vapor electrolysis). Among them, the specific solid electrolyte is preferably used for an all-solid state secondary battery.

More specifically, the specific solid electrolyte is preferably used as a solid electrolyte contained in a solid electrolyte layer, a positive electrode active material layer, and a negative electrode active material layer in an all-solid state secondary battery.

<Composition for forming solid electrolyte layer>

The specific solid electrolyte according to the embodiment of the present invention is preferably used as a component of a composition for forming a solid electrolyte layer. That is, the composition for forming a solid electrolyte layer contains the above-described specific solid electrolyte.

The specific solid electrolyte contained in the composition for forming a solid electrolyte layer is as described above.

The composition for forming a solid electrolyte layer may contain other components in addition to the specific solid electrolyte.

Examples of the other components include the binder and lithium salt described above.

The composition for forming a solid electrolyte layer may contain another solid electrolyte in addition to the specific solid electrolyte. The other solid electrolyte means a solid-form electrolyte capable of migrating ions therein. The solid electrolyte is preferably an inorganic solid electrolyte. The inorganic solid electrolyte is generally solid in a static state, and thus, generally, it is not disassociated or liberated into cations and anions.

Examples of the other solid electrolyte include a sulfide-based inorganic solid electrolyte, an oxide-based inorganic solid electrolyte other than the specific solid electrolyte, a halide-based inorganic solid electrolyte, and a hydride-based solid electrolyte.

Further, the composition for forming a solid electrolyte layer may contain a dispersion medium.

Examples of the dispersion medium include various organic solvents. Examples of the organic solvent include an alcohol compound, an ether compound, an amide compound, an amine compound, a ketone compound, an aromatic compound, an aliphatic compound, a nitrile compound, and an ester compound. Among them, an ether compound, a ketone compound, an aromatic compound, an aliphatic compound, or an ester compound is preferable.

The dispersion medium preferably has a boiling point of 50°C or higher and more preferably 70°C or higher at normal pressure (1 atm). The upper limit thereof is preferably 250°C or lower and more preferably 220°C or lower.

One kind of the dispersion medium may be used singly, or two or more kinds thereof may be used in combination.

The content of the dispersion medium in the composition for forming a solid electrolyte layer is not particularly limited; however, it is preferably 20% to 99% by mass and more preferably 25% to 70% by mass with respect to the total mass of the composition for forming a solid electrolyte layer.

The method of forming a solid electrolyte layer using the above-described composition for forming a solid electrolyte layer is not particularly limited; however, examples thereof include a method of applying a composition for forming a solid electrolyte layer and subjecting the formed coating film to a pressurization treatment.

The coating method for a composition for forming a solid electrolyte layer is not particularly limited, and examples thereof include spray coating, spin coating, dip coating, slit coating, stripe coating, an aerosol deposition method, thermal spraying, and bar coating.

It is noted that after applying the composition for forming a solid electrolyte layer, the obtained coating film may be subjected to a drying treatment, as necessary. The drying temperature is not particularly limited; however, the lower limit thereof is preferably 30°C or higher, more preferably 60°C or higher, and still more preferably 80°C or higher. The upper limit of the drying temperature is preferably 300°C or lower and more preferably 250°C or lower.

The method of subjecting a coating film to a pressurization treatment is not particularly limited; however, examples thereof include a method using a known press device (for example, a hydraulic cylinder pressing machine).

The pressurizing force at the time of the pressurization treatment is not particularly limited; however, it is preferably 5 to 1,500 MPa and more preferably 300 to 600 MPa from the viewpoint that the ion conductor of the solid electrolyte layer to be formed is more excellent.

The time of the pressurization treatment is not particularly limited; however, it is preferably 1 to 6 hours and more preferably 1 to 20 minutes from the viewpoint that the ion conductor of the solid electrolyte layer to be formed is more excellent and the viewpoint of productivity.

Further, a heating treatment may be carried out at the time of the pressurization treatment. The heating temperature at the time of the heating treatment is not particularly limited; however, it is preferably 30 to 300°C, and the heating time is more preferably 1 minute to 6 hours.

The atmosphere during the pressurization is not particularly limited, and examples thereof include an atmosphere of atmospheric air, an atmosphere of dried air (the dew point: -20°C or lower), and an atmosphere of inert gas (for example, argon, helium, or nitrogen).

(Solid electrolyte layer)

One preferred form of the solid electrolyte layer includes a solid electrolyte layer containing a specific solid electrolyte, which is formed of the above-described composition for forming a solid electrolyte layer.

The content of the specific solid electrolyte in the solid electrolyte layer is not particularly limited; however, it is preferably 50% by mass or more and more preferably 80% by mass or more with respect to the total mass of the solid electrolyte layer. The upper limit thereof is not particularly limited and may be 100% by mass with respect to the solid electrolyte layer.

The solid electrolyte layer may contain components other than the specific solid electrolyte. Examples of the above-described component include components excluding the dispersion medium, among the components which may be contained in the above-described composition for forming a solid electrolyte layer.

<Composition for forming active material layer>

The specific solid electrolyte according to the embodiment of the present invention is preferably used as a component of a composition for forming an active material layer. That is, the composition for forming an active material layer contains the above-described specific solid electrolyte. The term "active material layer" means a layer selected from the group consisting of a negative electrode active material layer and a positive electrode active material layer.

The composition for forming an active material layer contains at least the above-described specific solid electrolyte and an active material.

The mixing ratio of the specific solid electrolyte to the active material in the composition for forming an active material layer is not particularly limited; however, the mass ratio of the content of the specific solid electrolyte to the content of the active material (specific solid electrolyte/active material) is preferably 0.01 to 50 and more preferably 0.05 to 20, which it is not particularly limited.

The specific solid electrolyte contained in the composition for forming an active material layer is as described above.

Examples of the active material include a positive electrode active material and a negative electrode active material. Hereinafter, the active material will be described in detail.

(Negative electrode active material)

It is preferable that the negative electrode active material is capable of reversibly intercalating and deintercalating ions such as lithium ions. The negative electrode active material is not particularly limited as long as it has the above-described functions, and examples thereof include a carbonaceous material, an oxide of a metal or metalloid element, a lithium single body, a lithium alloy, and a negative electrode active material capable of forming an alloy with lithium.

The carbonaceous material that is used as the negative electrode active material is a material substantially consisting of carbon. Examples thereof include petroleum pitch, carbon black such as acetylene black (AB), graphite (natural graphite or artificial graphite such as vapor-grown graphite), and carbonaceous material obtained by baking a variety of synthetic resins such as polyacrylonitrile (PAN)-based resins or furfuryl alcohol resins.

Furthermore, examples thereof also include a variety of carbon fibers such as PAN-based carbon fibers, cellulose-based carbon fibers, pitch-based carbon fibers, vapor-grown carbon fibers, dehydrated polyvinyl alcohol (PVA)-based carbon fibers, lignin carbon fibers, vitreous carbon fibers, and activated carbon fibers, mesophase microspheres, graphite whisker, and tabular graphite.

These carbonaceous materials can be classified into non-graphitizable carbonaceous materials (also referred to as "hard carbon") and graphitizable carbonaceous materials based on the graphitization degree.

In addition, it is preferable that the carbonaceous material has the surface spacing, density, or crystallite size described in JP1987-022066A (JP-S62-022066A), JP1990-006856A (JP-H2-006856A), and JP1991-045473A (JP-H3-045473A). The carbonaceous material is not necessarily a single material and, for example, may be a mixture of natural graphite and artificial graphite described in JP1993-090844A (JP-H5-090844A) or graphite having a coating layer described in JP1994-004516A(JP-H6-004516A).

The carbonaceous material is preferably hard carbon or graphite, and it is more preferably graphite.

The oxide of a metal element or a metalloid element that can be used as the negative electrode active material is not particularly limited as long as it is an oxide capable of intercalating and deintercalating ions such as lithium ions, and examples thereof include an oxide of a metal element (metal oxide), a composite oxide of a metal element or a composite oxide of a metal element and a metalloid element, and an oxide of a metalloid element (a metalloid oxide). It is noted that a composite oxide of a metal element and a composite oxide of a metal element and a metalloid element are also collectively referred to as "metal composite oxide).

The metal composite oxide is preferably noncrystalline oxides, and they are also preferably chalcogenides which are reaction products between metal elements and elements in Group 16 of the periodic table.

In the present specification, the metalloid element refers to an element having intermediate properties between those of a metal element and a non-metalloid element. Typically, the metalloid elements include six elements including boron, silicon, germanium, arsenic, antimony, and tellurium, and further include three elements including selenium, polonium, and astatine.

In addition, "noncrystalline" represents an oxide having a broad scattering band with an apex in a range of $20°$ to $40°$ in terms of the $2\theta$ value in case of being measured by an X-ray diffraction method using a CuK$\alpha$ ray, and the oxide may have a crystalline diffraction line. The highest intensity in a crystalline diffraction line observed in a range of $40°$ to $70°$ in terms of the $2\theta$ value is preferably 100 times or less and more preferably 5 times or less with respect to the intensity of a diffraction line at the apex in a broad scattering band observed in a range of $20°$ to $40°$ in terms of the $2\theta$ value, and it is still more preferable that the oxide does not have a crystalline diffraction line.

In the compound group consisting of the noncrystalline oxides and the chalcogenides, noncrystalline oxides of metalloid elements and chalcogenides are more preferable, and (composite) oxides consisting of one element or a combination of two or more elements selected from elements (for example, Al, Ga, Si, Sn, Ge, Pb, Sb, and Bi) belonging to Groups 13 (IIIB) to 15 (VB) in the periodic table or chalcogenides are still more preferable.

The noncrystalline oxide and the chalcogenide are preferably $Ga_2O_3$, GeO, PbO, $PbO_2$, $Pb_2O_3$, $Pb_2O_4$, $Pb_3O_4$, $Sb_2O_3$, $Sb_2O_4$, $Sb_2O_8Bi_2O_3$, $Sb_2O_8Si_2O_3$, $Sb_2O_5$, $Bi_2O_3$, $Bi_2O_4$, GeS, PbS, $PbS_2$, $Sb_2S_3$, or $Sb_2S_5$.

The negative electrode active material which can be used in combination with noncrystalline oxide negative electrode active material containing Sn, Si, or Ge as a major constitutional component is preferably a carbonaceous material capable of intercalating and/or deintercalating lithium ions or lithium metal, a lithium single body, a lithium alloy, or a negative electrode active material that is capable of being alloyed with lithium.

It is preferable that an oxide of a metal element or a metalloid element (in particular, a metal (composite) oxide) and the chalcogenide contains at least one of titanium or lithium as the constitutional component from the viewpoint of high current density charging and discharging characteristics.

Examples of the metal composite oxide (lithium composite metal oxide) including lithium include a composite oxide of lithium oxide and the above metal composite oxide or the above chalcogenide. More specific examples thereof include $Li_2SnO_2$.

It is also preferable that the negative electrode active material (for example, a metal oxide) contains a titanium element (a titanium oxide). Specifically, $Li_4Ti_5O_{12}$ (lithium titanium oxide [LTO]) is preferable from the viewpoint that the volume variation during the intercalation and deintercalation of lithium ions is small, and thus the high-speed charging and discharging characteristics are excellent, and the deterioration of electrodes is suppressed, whereby it becomes possible to improve the life of the all-solid state secondary battery.

The lithium alloy as the negative electrode active material is not particularly limited as long as it is typically used as a negative electrode active material for an all-solid state lithium ion secondary battery, and examples thereof include a lithium aluminum alloy.

The negative electrode active material capable of forming an alloy with lithium is not particularly limited as long as it is typically used as a negative electrode active material for an all-solid state secondary battery. Examples of the negative electrode active material include a negative electrode active material (an alloy) containing a silicon element or a tin element and a metal such as Al or In, where a negative electrode active material (a silicon element-containing active material) containing a silicon element capable of exhibiting high battery capacity is preferable, and a silicon element-containing active material in which the content of the silicon element is 50% by mole or more with respect to all constitutional elements is more preferable.

In general, a negative electrode containing the negative electrode active material (for example, an Si negative electrode containing a silicon element-containing active material or an Sn negative electrode containing an active material containing a tin element) can intercalate a larger amount of Li ions than a carbon negative electrode (for example, graphite or acetylene black). That is, the amount of Li ions intercalated per unit mass increases. Therefore, it is possible to increase the battery capacity. As a result, there is an advantage that the battery driving duration can be extended.

Examples of the silicon element-containing active material include a silicon-containing alloy (for example, $LaSi_2$, $VSi_2$, La-Si, Gd-Si, or Ni-Si) containing a silicon material such as Si or SiOx ($0 < x \leq 1$) and furthermore titanium, vanadium, chromium, manganese, nickel, copper, or lanthanum, or a structured active material thereof (for example, $LaSi_2$/Si). Other examples thereof include an active material containing a silicon element and a tin element, such as SnSiOs or $SnSiS_3$. It is noted that since SiOx itself can be used as a negative electrode active material (a metalloid oxide) and Si is produced along with the operation of an all-solid state secondary battery, SiOx can be used as a negative electrode active material (or a precursor material thereof) capable of being alloyed with lithium.

Examples of the negative electrode active material having a tin element include an active material containing Sn, SnO, $SnO_2$, SnS, or $SnS_2$, and the above-described active material including a silicon element and a tin element.

From the viewpoint of improving battery capacity, the negative electrode active material is preferably a negative electrode active material capable of being alloyed with lithium, more preferably the above-described silicon material or silicon-containing alloy (an alloy containing a silicon element), and still more preferably silicon (Si) or a silicon-containing alloy.

The shape of the negative electrode active material is not particularly limited; however, it is preferably a particle shape. The volume average particle diameter of the negative electrode active material is not particularly limited; however, it is preferably 0.1 to 60 $\mu$m, more preferably 0.5 to 20 $\mu$m, and still more preferably 1.0 to 15 $\mu$m.

The volume average particle diameter is measured according to the following procedure.

Using water (heptane in a case where the inorganic solid electrolyte is unstable in water), the negative electrode active material is diluted in a 20 mL sample bottle to prepare 1% by mass of a dispersion liquid. The diluted dispersion liquid sample is irradiated with 1 kHz ultrasonic waves for 10 minutes and is then immediately used for testing. Data collection is carried out 50 times using this dispersion liquid sample, a laser diffraction/scattering-type particle size distribution analyzer, and a quartz cell for measurement at a temperature of 25°C to obtain the volume average particle diameter. Other detailed conditions and the like can be found in JIS Z8828: 2013 "Particle Diameter Analysis-Dynamic Light Scattering" as necessary. Five samples per level are prepared, and the average values therefrom are employed.

One kind of negative electrode active material may be used singly, or two or more kinds thereof may be used in combination.

At least a part of the surface of the negative electrode active material may be coated with a coating layer containing a surface coating agent consisting of another metal oxide.

Examples of the surface coating agent include a metal oxide containing Ti, Nb, Ta, W, Zr, Al, Si, or Li. Specific examples thereof include titanium oxide spinel, tantalum-based oxides, niobium-based oxides, and lithium niobate-based compounds, and specific examples thereof include $Li_4Ti_5O_{12}$, $Li_2Ti_2O_5$, $LiTaO_3$, $LiNbO_3$, $LiAlO_2$, $Li_2ZrO_3$, $Li_2WO_4$, $Li_2TiO_3$, $Li_2B_4O_7$, $Li_3PO_4$, $Li_2MoO_4$, $Li_3BO_3$, $LiBO_2$, $Li_2CO_3$, $Li_2SiO_3$, $SiO_2$, $TiO_2$, $ZrO_2$, $Al_2O_3$, and $B_2O_3$.

An aspect in which at least a part of the surface of the negative electrode active material is coated with a coating layer containing the specific solid electrolyte is one of the preferred aspects of the negative electrode active material.

The thickness of the coating layer containing a solid electrolyte contained in the negative electrode active material is not particularly limited, and it is, for example, 5 nm or more and 10 $\mu$m or less.

As a method of forming a coating layer on the surface of the negative electrode active material, any one of methods of forming a coating layer on the surface of the positive electrode active material be described later can be applied.

In addition, the surface of the electrode containing the negative electrode active material may be subjected to a surface treatment with sulfur or phosphorous.

Further, the particle surface of the negative electrode active material may be subjected to a surface treatment using an actinic ray or an active gas (for example, plasma) before or after the surface coating.

(Positive electrode active material)

It is preferable that the positive electrode active material is capable of reversibly intercalating and deintercalating ions such as lithium ions. The positive electrode active material is not particularly limited as long as it has the above-described functions. The positive electrode active material is more preferably a transition metal oxide and still more preferably a transition metal oxide having a transition metal element $M^a$ (one or more elements selected from Co, Ni, Fe, Mn, Cu, and V). In addition, an element $M^b$ (an element of Group 1 (Ia) of the metal periodic table other than lithium, an element of Group 2 (IIa), or an element such as Al, Ga, In, Ge, Sn, Pb, Sb, Bi, Si, P, or B) may be mixed into this transition metal oxide. The mixing amount is preferably 0% to 30% by mol of the amount (100% by mol) of the transition metal element $M^a$. Among the above, it is more preferable that the transition metal oxide is synthesized by mixing the above components such that a molar ratio $Li/M^a$ is 0.3 to 2.2.

Specific examples of the transition metal oxides include transition metal oxides having a bedded salt-type structure (MA), transition metal oxides having a spinel-type structure (MB), lithium-containing transition metal phosphoric acid compounds (MC), lithium-containing transition metal halogenated phosphoric acid compounds (MD), and lithium-containing transition metal silicate compounds (ME). Among them, a transition metal oxide having a bedded salt-type structure (MA) is preferable, and $LiCoO_2$ or $LiNi_{1/3}Co_{1/3}Mn_{1/3}O_2$ is more preferable.

Examples of the transition metal oxides having a bedded salt-type structure (MA) include $LiCoO_2$ (lithium cobalt oxide [LCO]), $LiNi_2O_2$ (lithium nickelate), $LiNi_{0.85}Co_{0.10}Al_{0.05}O_2$ (lithium nickel cobalt aluminum oxide [NCA]), $LiNi_{1/3}Co_{1/3}Mn_{1/3}O_2$ (lithium nickel manganese cobalt oxide [NMC]), and $LiNi_{0.5}Mn_{0.5}O_2$ (lithium manganese nickelate).

Examples of the transition metal oxides having a spinel-type structure (MB) include $LiMn_2O_4$ (LMO), $LiCoMnO_4$,

$Li_2FeMn_3O_8$, $Li_2CuMn_3O_8$, $Li_2CrMn_3O_8$, and $Li_2NiMn_3O_8$.

Examples of the lithium-containing transition metal phosphoric acid compound (MC) include olivine-type iron phosphate salts such as $LiFePO_4$ and $Li_3Fe_2(PO_4)_3$, iron pyrophosphates such as $LiFeP_2O_7$, and cobalt phosphates such as $LiCoPO_4$, and a monoclinic NASICON-type vanadium phosphate salt such as $Li_3V_2(PO_4)_3$ (lithium vanadium phosphate).

Examples of the lithium-containing transition metal halogenated phosphoric acid compound (MD) include an iron fluorophosphate such as $Li_2FePO_4F$, a manganese fluorophosphate such as $Li_2MnPO_4F$, a cobalt fluorophosphate such as $Li_2CoPO_4F$.

Examples of the lithium-containing transition metal silicate compound (ME) include $Li_2FeSiO_4$, $Li_2MnSiO_4$, and $Li_2CoSiO_4$.

The shape of the positive electrode active material is not particularly limited; however, it is preferably a particle shape. The volume average particle diameter of the positive electrode active material is not particularly limited; however, it is preferably 0.1 to 50 $\mu$m. The volume average particle diameter of the positive electrode active material particles can be measured in the same manner as the volume average particle diameter of the negative electrode active material

The positive electrode active material obtained by the baking method may be washed before use, by using at least one washing agent selected from the group consisting of water, an acidic aqueous solution, an alkaline aqueous solution, and an organic solvent.

Similar to the negative electrode active material, at least a part of the surface of the positive electrode active material may be coated with a coating layer containing the surface coating agent, sulfur, or phosphorus, and/or may be subjected to a surface coating using an actinic ray or an active gas. Among the above, an aspect in which at least a part of the surface of the positive electrode active material is coated with a coating layer containing the specific solid electrolyte is one of the preferred aspects of the positive electrode active material.

The thickness of the coating layer containing a solid electrolyte contained in the positive electrode active material is not particularly limited, and it is, for example, 5 nm or more and 10 $\mu$m or less.

A method of forming a coating layer on the surface of the positive electrode active material is not particularly limited, and it is possible to apply a method of spraying a solution containing a surface coating agent and carrying out a drying treatment to coat the surface of the positive electrode active material with a coating layer, and a known method such as a method of subjecting a coating layer on the surface of the positive electrode active material to vapor deposition by sputtering or the like. Regarding the method of forming a coating layer on the surface of the positive electrode active material, the methods described in JP2017-059393A and JP2015-056307A can also be referred to, the descriptions of which are incorporated in the present specification.

One kind of positive electrode active material may be used singly, or two or more kinds thereof may be used in combination.

(Other components)

The composition for forming an active material layer may contain other components in addition to the specific solid electrolyte and the active material.

The composition for forming an active material layer may contain a conductive auxiliary agent.

As the conductive auxiliary agent, a conductive auxiliary agent that is known as a conductive auxiliary agent can be used. Examples of the conductive auxiliary agent include graphite such as natural graphite and artificial graphite, carbon black such as acetylene black, Ketjen black, and furnace black, amorphous carbon such as needle cokes, a carbon fiber such as a vapor-grown carbon fiber or a carbon nanotube, and a carbonaceous material such as graphene or fullerene, which are electron-conductive materials. In addition, a conductive polymer such as polyaniline, polypyrrole, polythiophene, polyacetylene, or a polyphenylene derivative may also be used as the conductive auxiliary agent.

In addition, a conductive auxiliary agent containing no carbon atom, such as a metal powder or metal fiber, may be used.

It is noted that the conductive auxiliary agent refers to a component that do not cause the intercalation and deintercalation of Li ions at a time when a battery is charged and discharged and do not function as an active material. Therefore, among the conductive auxiliary agents, a conductive auxiliary agent that can function as the active material in the active material layer at the time of charging and discharging of the battery is classified as an active material but not as a conductive auxiliary agent. Whether or not the conductive auxiliary agent functions as the active material at the time of charging and discharging of a battery is not unambiguously determined but is determined by the combination with the active material.

In addition, examples of the other components also include the above-described binder and lithium salt.

The composition for forming an active material layer may contain a dispersion medium. The kind and suitable aspect of dispersion medium are the same as the kind and suitable aspect of the dispersion medium which may be contained in the above-described composition for forming a solid electrolyte layer.

The composition for forming an active material layer may contain, as other components other than the respective components described above, an ionic liquid, a thickener, a crosslinking agent (an agent that causes a crosslinking reaction by radical polymerization, condensation polymerization, or ring-opening polymerization), a polymerization initiator (an agent that generates an acid or a radical by heat or light), an antifoaming agent, a leveling agent, a dehydrating agent, and/or an antioxidant.

The method of forming an active material layer using the above-described composition for forming an active material layer is not particularly limited; however, examples thereof include a method of applying a composition for forming an active material layer onto a collector described later and subjecting the formed coating film to a pressurization treatment.

The coating method for a composition for forming an active material layer is not particularly limited, and examples thereof include spray coating, spin coating, dip coating, slit coating, stripe coating, an aerosol deposition method, thermal spraying, and bar coating.

It is noted that after applying the composition for forming an active material layer, the obtained coating film may be subjected to a drying treatment, as necessary. The drying treatment is preferably carried out before the above-described pressurization treatment. The drying temperature is not particularly limited; however, the lower limit thereof is preferably 30°C or higher, more preferably 60°C or higher, and still more preferably 80°C or higher. The upper limit of the drying temperature is preferably 300°C or lower and more preferably 250°C or lower.

The method of subjecting a coating film of the composition for forming an active material layer to a pressurization treatment is not particularly limited; however, examples thereof include a method using a known press device (for example, a hydraulic cylinder pressing machine).

The pressurizing force at the time of the pressurization treatment is not particularly limited; however, it is preferably 5 to 1,500 MPa and more preferably 300 to 600 MPa.

The time of the pressurization treatment is not particularly limited; however, it is preferably 1 minute to 6 hours and more preferably 1 to 20 minute from the viewpoint of productivity.

Further, a heating treatment may be carried out at the time of the pressurization treatment. The heating temperature at the time of the heating treatment is not particularly limited; however, it is preferably 30 to 300°C, and the heating time is preferably 1 minute to 6 hours.

The atmosphere during the pressurization is not particularly limited, and examples thereof include an atmosphere of atmospheric air, an atmosphere of dried air (the dew point: -20°C or lower), and an atmosphere of inert gas (for example, argon, helium, or nitrogen).

(Active material layer)

One preferred form of the active material layer includes an active material layer containing a specific solid electrolyte, which is formed of the above-described composition for forming an active material layer. Among the above, a positive electrode active material layer containing the specific solid electrolyte and the positive electrode active material is preferable.

The content of the specific solid electrolyte in the active material layer is not particularly limited; however, it is preferably 10% to 70% by mass and more preferably 20% to 50% by mass with respect to the total mass of the active material layer.

The content of the active material (positive electrode active material or negative electrode active material) in the active material layer is not particularly limited; however, it is preferably 30% to 90% by mass and more preferably 50% to 80% by mass with respect to the total mass of the active material layer.

The active material layer may contain other components in addition to the active material and the specific solid electrolyte. Examples of the other component include components excluding the dispersion medium, among the components which may be contained in the above-described composition for forming an active material layer.

<Electrode sheet for all-solid state secondary battery>

The specific solid electrolyte may be used to form an electrode sheet for an all-solid state secondary battery.

The electrode sheet for an all-solid state secondary battery (hereinafter, may be simply referred to as an "electrode sheet") according to the embodiment of the present invention is a sheet-shaped molded body capable of forming an electrode active material layer of an all-solid state secondary battery, and it is preferably used in an electrode or a laminate of an electrode and a solid electrolyte layer.

The electrode sheet has at least an active material layer. The specific solid oxide is preferably contained in at least one active material layer included in the electrode sheet.

The electrode sheet may be a laminate in which an active material layer is formed on a base material (a collector) or may be formed from only a single body of an active material layer without having a base material. In addition, the electrode sheet includes an aspect which is obtained by laminating a collector, an active material layer, and a solid electrolyte layer in this order, and an aspect obtained by laminating a collector, an active material layer, a solid electrolyte layer, and an active material layer in this order. The electrode sheet may have another layer in addition to the active material layer, the collector, and the solid electrolyte layer.

The layer thickness of each of the layers that constitute the electrode sheet is the same as the layer thickness of each of the layers described later regarding the all-solid state secondary battery.

A manufacturing method for an electrode sheet is not particularly limited, and for example, the electrode sheet can be manufactured by forming an active material layer using the above-described composition for forming an active material layer.

Examples thereof include a method of applying a composition for forming an active material layer onto a collector directly or through another layer to form a coating film and subjecting the obtained coating film to a pressurization treatment.

Examples of the method of applying a composition for forming an active material layer and the method of subjecting a coating film to a pressurization treatment include the methods described in the composition for forming an active material layer.

[Binder (according to third embodiment)]

A binder according to a third embodiment of the present invention includes the following binder.

The binder according to the present embodiment is represented by General Formula (I).

$$A_aB_bO_cX_d \ldots \qquad \text{(I)}$$

In General Formula (I), A represents at least one selected from the group consisting of Li and Na.

X represents at least one selected from the group consisting of F, Cl, Br, I, S, N, H, Se, Te, C, P, Si, Al, Ga, In, Ge, As, Sb, and Sn.

a represents the number of moles of each element represented by A and satisfies $1.75 < a < 2.45$.
b satisfies $3.75 < b < 4.25$.
c satisfies $6.50 < c < 10.00$.
d represents a total number of moles of elements represented by X and satisfies $0 < d < 0.50$.

The inventors of the present invention found that a compound containing a predetermined amount of each of the elements A, B, and O and containing a predetermined amount of the element X is excellent in ionic conductivity and is also excellent in the binding property (adhesiveness) to other components, and thus it is useful particularly as a binder for a secondary battery.

The element composition and physical properties of the binder according to the present embodiment are the same as the element composition and physical properties of the first specific solid electrolyte described above, including the suitable aspect thereof.

[Binder (according to fourth embodiment)]

A binder according to a fourth embodiment of the present invention includes the following binder.

The binder according to the present embodiment contains Li, B, O, and X, and satisfies the following requirements A-1 and A-2.

X represents at least one kind of element selected from the group consisting of F, Cl, Br, I, S, N, H, Se, Te, C, P, Si, Al, Ga, In, Ge, As, Sb, and Sn.

the requirement A-1: In a reduced two-body distribution function G(r) of the oxide solid electrolyte obtained from an X-ray total scattering measurement, a first peak in which a peak top is located in a range where r is $1.43 \pm 0.2$ Å and a second peak in which a peak top is located in a range where r is $2.40 \pm 0.2$ Å are present, G(r) of the peak top of the first peak and G(r) of the peak top of the second peak indicate more than 1.0, and an absolute value of G(r) is less than 1.0 in a range where r is more than 5 Å and 10 Å or less.

The inventors of the present invention found that a compound containing the element X in addition to Li, B, and O and satisfying the requirements A-1 and A-2 is excellent in ionic conductivity and is also excellent in the binding property (adhesiveness) to other components, and thus it is useful particularly as a binder for a secondary battery.

As described regarding the specific solid electrolyte, since the binder according to the present embodiment, which satisfies the requirements A-1 and A-2, exhibits an elastic characteristic of being easily plastically deformed, it is presumed that the adhesiveness to other ion conductors is excellent in a molded body that is formed by a pressurization treatment of a binder and furthermore, interface resistance is small, and ion conductivity is excellent.

The element composition and physical properties of the binder according to the present embodiment are the same as the element composition and physical properties of the second specific solid electrolyte described above, including the suitable aspect thereof.

Hereinafter, unless otherwise specified, the binder according to the third embodiment and the binder according to the fourth embodiment will be collectively described without distinguishing them. In addition, the binder according to the third embodiment and the binder according to the fourth embodiment are also collectively described to as a "specific binder".

A manufacturing method for a specific binder is the same as the manufacturing method for the specific solid electrolyte already described, including the suitable aspect thereof.

[Molded body of specific binder]

A molded body of the specific binder (hereinafter, also referred to as a "second specific molded body") is formed of the above-described specific binder.

A forming method for the second specific molded body is not particularly limited; however, examples thereof include a method of subjecting the specific binder to a pressurization treatment to form a molded body. That is, it is preferable that the second specific molded body is formed by subjecting the specific binder to a pressurization treatment (pressure molding treatment).

A method for the pressurization treatment is the same as the method for the pressurization treatment already described as the forming method for the specific molded body.

The second specific molded body may be a composite body containing a specific binder and other components other than the specific binder. Examples of the other components contained in the second specific molded body include a specific solid electrolyte, a second lithium compound, and another binder other than the specific binder.

In order to further improve the ionic conductivity, the second specific molded body preferably contains at least one selected from the group consisting of the specific solid electrolyte and the second lithium compound. The specific solid electrolyte and the second lithium compound are as described above, including the preferred aspects thereof.

Examples of the other binder contained in the second specific molded body in addition to the specific binder include the above-described organic polymeric compound (polymer) contained as a binder in the specific molded body.

In a case where the second specific molded body contains another binder, the content of the other binder is preferably 0.1% to 3% by mass and more preferably 0.5% to 1% by mass with respect to the total mass of the second specific molded body.

The second specific molded body may contain another lithium compound other than the second lithium compound, and/or another solid electrolyte other than the specific solid electrolyte.

The ion conductivity of the second specific molded body is not particularly limited; however, it is preferably $1.0 \times 10^{-6}$ S/cm or more and more preferably $1.0 \times 10^{-5}$ S/cm or more from the viewpoint of application to various use applications. The measuring method for the ion conductivity of the second specific molded body is the same as the measuring method for the ion conductivity of the specific binder.

[Use application]

The specific binder described above can be used in various applications.

For example, it can be used in, for example, various batteries (for example, an all-solid state secondary battery, a solid oxide-type fuel cell and a battery using solid oxide water vapor electrolysis, as well as a semi-solid state secondary battery and a lithium ion secondary battery which use a liquid electrolyte). Among them, the specific binder is preferably used for an all-solid state secondary battery.

More specifically, the specific binder is preferably used as a binder contained in any one of a solid electrolyte layer, a positive electrode active material layer, or a negative electrode active material layer in an all-solid state secondary battery.

<Solid electrolyte layer>

Examples of the preferred use application of the specific binder include a solid electrolyte layer that contains at least a specific binder and a solid electrolyte.

The content of the specific binder in the solid electrolyte layer is not particularly limited; however, it is preferably 3% to 50% by mass and more preferably 5% to 30% by mass with respect to the total mass of the solid electrolyte layer.

Examples of the solid electrolyte contained in the solid electrolyte layer include a specific solid electrolyte and a solid electrolyte other than the specific solid electrolyte. The content of the solid electrolyte in the solid electrolyte layer is, for example, preferably 50% by mass or more and more preferably 80% by mass or more with respect to the total mass of the solid electrolyte layer. The upper limit thereof is not particularly limited, and it may be the remainder of the specific binder.

The method of forming a solid electrolyte layer is not particularly limited; however, examples thereof include a method of applying a composition for forming a solid electrolyte layer, the composition containing a specific binder and a solid electrolyte, and subjecting the formed coating film to a pressurization treatment.

The composition for forming a solid electrolyte layer may contain a dispersion medium or may contain other components in addition to a specific binder, a solid electrolyte, and a dispersion medium.

Regarding the specific forming method for a solid electrolyte layer and the composition for forming a solid electrolyte layer, the contents already described as specific examples of the use application of the specific solid electrolyte can be referred to, including the preferred aspects thereof.

<Active material layer>

Another preferred use application of the specific binder includes an active material layer that contains at least a specific binder and an active material.

Regarding the configuration, manufacturing method, and the like of the active material layer containing at least a specific binder and an active material, the contents already described regarding the active material layer containing the specific solid electrolyte can be referred to, including the preferred aspect thereof, except that a specific binder is used instead of the specific solid electrolyte.

<Electrode sheet>

Another preferred use application of the specific binder includes an electrode sheet formed of the specific binder.

Regarding the configuration, manufacturing method, and the like of the electrode sheet formed of the specific binder, the contents already described regarding the electrode sheet for an all-solid state secondary battery, formed of the specific solid electrolyte, can be referred to, including the preferred aspect thereof, except that a specific binder is used instead of the specific solid electrolyte.

[All-solid state secondary battery]

An all-solid state secondary battery has a positive electrode for an all-solid state secondary battery (hereinafter, simply referred to as a "positive electrode"), a negative electrode for an all-solid state secondary battery, opposite to the positive electrode (hereinafter, simply referred to as a "negative electrode"), and a solid electrolyte layer disposed between the positive electrode and the negative electrode.

In the all-solid state secondary battery, at least one layer selected from the group consisting of a positive electrode, a negative electrode, and a solid electrolyte layer includes at least one selected from the group consisting of a specific solid electrolyte and a specific binder.

In the all-solid state secondary battery, it is preferable that at least one of the positive electrode or the negative electrode contains at least one selected from the group consisting of a specific solid electrolyte and a specific binder, or the solid electrolyte layer contains a specific solid electrolyte. Among the above, it is more preferable that at least one of the positive electrode active material layer (or the positive electrode) or the solid electrolyte layer contains a specific solid electrolyte, and it is still more preferable that the solid electrolyte layer contains a specific solid electrolyte.

Hereinafter, the positive electrode and the negative electrode are also collectively referred to as an "electrode".

The electrode has an active material layer, and it preferably has a collector (a positive electrode collector or a negative electrode collector) and an active material layer that is formed on the collector. As described above, the active material layer is a layer having an active material and may further have a solid electrolyte. The active material layer preferably has at least a specific solid electrolyte or a specific binder.

That is, it is preferable that the electrode has an active material layer including an active material and a specific solid electrolyte or specific binder and has a collector.

Among the above, in the all-solid state secondary battery, it is preferable that the positive electrode active material layer has the specific solid electrolyte. That is, it is preferable that the positive electrode has a positive electrode active material layer containing a positive electrode active material and a specific solid electrolyte and has a positive electrode collector.

Hereinafter, an example of the all-solid state secondary battery according to the embodiment will be described with reference to Fig. 8. The all-solid state secondary battery according to the embodiment of the present invention is not limited to the aspect illustrated in Fig. 8.

Fig. 8 is a cross-sectional view illustrating an example of a configuration of an all-solid state secondary battery according to the present invention. An all-solid state secondary battery 10 illustrated in Fig. 8 has a laminate obtained by laminating, from a negative electrode side, a negative electrode collector 1, a negative electrode active material layer 2, a solid electrolyte layer 3, a positive electrode active material layer 4, and a positive electrode collector 5 in this order. In the all-solid state secondary battery 10, at least one layer selected from the group consisting of the solid electrolyte layer 3, the positive electrode active material layer 4, and the negative electrode active material layer 2 contains a specific solid electrolyte. It is preferable that at least one of the solid electrolyte layer 3 or the positive electrode active material layer 4 contains the specific solid electrolyte.

In the all-solid state secondary battery 10 illustrated in Fig. 8, The respective layers are in contact with each other, and thus structures thereof are adjacent. In a case in which the above-described structure is employed, during charging, electrons (e⁻) are supplied to the negative electrode side, and lithium ions (Li⁺) are accumulated on the negative electrode side. On the other hand, during discharging, the lithium ions (Li⁺) accumulated in the negative electrode side return to the positive electrode, and electrons are supplied to an operation portion 6. In the example illustrated in the drawing, an electric bulb is employed as a model as an operation portion 6, and a configuration in which the electric bulb is turned on by discharge is constructed.

The solid electrolyte layer 3 is located between the positive electrode and the negative electrode and contains a solid electrolyte. The solid electrolyte layer 3 preferably contains a specific solid electrolyte. The solid electrolyte layer containing the specific solid electrolyte is as described above.

In a case where the solid electrolyte layer 3 does not contain the specific solid electrolyte, the solid electrolyte that constitutes the solid electrolyte layer 3 is not particularly limited, and examples thereof include a sulfide solid electrolyte and an oxide solid electrolyte other than the specific solid electrolyte.

The thickness of the solid electrolyte layer 3 is not particularly limited; however, it is preferably 10 to 1,000 $\mu$m, and more preferably 20 $\mu$m or more and less than 500 $\mu$m, in consideration of the dimensions of the all-solid state secondary battery.

The positive electrode active material layer 4 may contain the positive electrode active material described above and may contain a specific solid electrolyte. The positive electrode active material layer containing the specific solid electrolyte is as described above.

In addition, examples of the aspect of the positive electrode active material layer 4 in a case of not containing the specific solid electrolyte include an aspect in which, in the positive electrode active material layer containing the specific solid electrolyte described above, at least one selected from the group consisting of a sulfide solid electrolyte and an oxide solid electrolyte other than the specific solid electrolyte is contained instead of the specific solid electrolyte.

The thickness of the positive electrode active material layer is not particularly limited; however, it is preferably 10 to 1,000 $\mu$m, more preferably 20 $\mu$m or more and less than 500 $\mu$m, and still more preferably 50 $\mu$m or more and less than 500 $\mu$m, in consideration of the dimensions of the all-solid state secondary battery.

The negative electrode active material layer 2 may contain the negative electrode active material described above and may contain a specific solid electrolyte. The components contained in the negative electrode active material layer 2 and the production method for the negative electrode active material layer 2 are as described above.

Examples of the aspect of the negative electrode active material layer 2 in a case of not containing the specific solid electrolyte include an aspect in which, in the negative electrode active material layer containing the specific solid electrolyte described above, at least one selected from the group consisting of a sulfide solid electrolyte and an oxide solid electrolyte other than the specific solid electrolyte is contained instead of the specific solid electrolyte.

The thickness of the negative electrode active material layer 2 is not particularly limited; however, it is preferably 10 to 1,000 $\mu$m, more preferably 20 $\mu$m or more and less than 500 $\mu$m, and still more preferably 50 $\mu$m or more and less than 500 $\mu$m, in consideration of the dimensions of the all-solid state secondary battery.

In addition, the thickness of at least one of the positive electrode active material layer or the negative electrode active material layer is preferably 50 $\mu$m or more and less than 500 $\mu$m.

[Collector]

The positive electrode collector 5 and the negative electrode collector 1 are preferably an electron conductor.

Examples of the material that forms the positive electrode collector include aluminum, an aluminum alloy, stainless steel, nickel, and titanium, where aluminum or an aluminum alloy is preferable. Examples of the positive electrode collector also include a collector having a thin film that is formed by treating a surface of aluminum or stainless steel by using carbon, nickel, titanium, or silver.

Examples of the material that forms the negative electrode collector include aluminum, copper, a copper alloy, stainless steel, nickel, and titanium, where aluminum, copper, a copper alloy, or stainless steel is preferable. It is noted that examples of the negative electrode collector also include a collector having a thin film that is formed by treating a surface of aluminum, copper, a copper alloy, or stainless steel by using carbon, nickel, titanium, or silver.

The shape of the collector is generally a film sheet shape; however, another shape may be used.

The thickness of the collector is not particularly limited; however, it is preferably 1 to 500 μm.

In addition, it is also preferable to provide protrusions and recesses on the surface of the collector by a surface treatment, depending on the use application.

The all-solid state secondary battery may be used as a laminate having the above-described structure depending on the intended use. However, in order to adopt a form of a dry cell, it is preferable to further enclose the laminate having the above-described structure in a housing.

The housing may be made of a metal or may be made of a resin (plastic).

Examples of the housing made of a metal include a housing of an aluminum alloy and a housing made of stainless steel. The housing made of a metal has a housing on a positive electrode side and a housing on a negative electrode side, which are not electrically connected to each other, and it preferably has a configuration in which the housing on a positive electrode side is electrically connected to a positive electrode collector, and the housing on a negative electrode side is electrically connected to a negative electrode collector. In this case, the positive electrode-side housing and the negative electrode-side housing are preferably integrated by being joined together through a gasket for short circuit prevention.

The all-solid state secondary battery according to the present invention is not limited to the above-described specific configuration and may have a configuration other than the above-described configuration.

For example, in the all-solid state secondary battery 10 described above, at least one layer selected from the group consisting of the solid electrolyte layer 3, the positive electrode active material layer 4, and the negative electrode active material layer 2 contains the specific solid electrolyte. However, the all-solid state secondary battery according to the present invention may be an all-solid state secondary battery in which at least one layer selected from the group consisting of a solid electrolyte layer, a positive electrode active material layer, and a negative electrode active material layer contains a specific binder.

[Manufacturing method for all-solid state secondary battery]

The manufacturing method for the all-solid state secondary battery described above is not particularly limited, and examples thereof include known methods. Among them, a method using the above-described composition for forming an active material layer and/or composition for forming a solid electrolyte layer is preferable.

Examples of the manufacturing method for an all-solid state secondary battery include a method of preparing an all-solid state secondary battery having a structure in which a positive electrode collector, a positive electrode active material layer, a solid electrolyte layer, a negative electrode active material layer, and a negative electrode collector are laminated in this order, by carrying out a first step of applying a composition for forming a positive electrode active material layer onto a metal foil as a positive electrode collector to form a coating film containing a positive electrode active material; a second step of applying a composition for forming a solid electrolyte layer onto the coating film formed in the first step to form a coating film containing a solid electrolyte; a third step of applying a composition for forming a negative electrode active material layer onto the coating film formed in the second step to form a coating film containing a negative electrode active material; a fourth step of overlaying a negative electrode collector (a metal foil) on the coating film formed in the third step; and a fifth step of subjecting an obtained laminate to a pressurization treatment. The laminate prepared by the above method may be enclosed in a housing to prepare an all-solid state secondary battery having a housing.

In addition, an all-solid state secondary battery may be manufactured by reversing the order of forming each layer so that a coating film containing a negative electrode active material, a coating film containing a solid electrolyte, and a coating film containing a positive electrode active material are formed in this order on a negative electrode collector, a positive electrode collector is further overlaid thereon, and then the obtained laminate is subjected to a pressurization treatment.

As another method, a positive electrode active material layer, a solid electrolyte layer, and a negative electrode active material layer may be separately prepared and laminated to manufacture an all-solid state secondary battery.

The all-solid state secondary battery is preferably initialized after production or before use. The initialization method is not particularly limited, and it is possible to initialize an all-solid state secondary battery by, for example, carrying out initial charging and discharging in a state where the pressing pressure is increased and then releasing the pressure until the pressure falls within the range of the pressure condition at the time of using the all-solid state secondary battery.

[Use application of all-solid state secondary battery]

The all-solid state secondary battery can be applied to various applications. The application aspect thereof is not particularly limited, and as a use application in a case of being mounted in an electronic apparatus, examples thereof include a notebook computer, a pen-based input personal computer, a mobile personal computer, an e-book player, a mobile phone, a cordless phone handset, a pager, a handy terminal, a portable facsimile transceiver, a portable copying machine, a portable printer, a headphone stereo, a video movie player, a liquid crystal television, a handy cleaner, a portable CD player, a mini disc player, an electric shaver, a transceiver, an electronic notebook, a calculator, a memory card, a portable tape recorder, a radio, and a backup power supply. Additionally, examples of the consumer usage thereof include an automobile, an electric vehicle, a motor, a lighting instrument, a toy, a game device, a road conditioner, a watch, a strobe, a camera, and a medical device (a pacemaker, a hearing aid, a shoulder massage device, and the like). Furthermore, the all-solid state secondary battery can be used for a variety of military usages and universe usages. In addition, the all-solid state secondary battery can also be combined with a solar battery.

Examples

Hereinafter, the present invention will be described in more detail based on Examples; however, the present invention is not limited thereto be interpreted. "Parts" and "%" that represent compositions in the following Examples are mass-based unless particularly otherwise described.

[Example 1]

<Preparation of specific solid electrolyte>

Using a ball mill (P-7 manufactured by FRITSCH), a powdery $Li_2B_4O_7$ crystal (LBO powder) (manufactured by RARE METALLIC Co., Ltd.) was subjected to ball milling to obtain a finely processed lithium tetraborate (hereinafter, also referred to as an "LBO fine substance") under the following conditions, pot: YSZ (45 ml), pulverization ball: YSZ (average particle diameter: 5 mm, number of balls: 50 balls), rotation speed: 370 revolutions per minute (rpm), LBO powder amount: 1 g, atmosphere: atmospheric air, and treatment time of ball milling: 100 hours.

To the obtained LBO fine substance, 0.02 g (2 % by mass with respect to the LBO powder) of LiFSI ($Li(FSO_2)_2N$) was added as a specific element source for doping with F, S, and N, and ball milling was further carried out 100 hours to obtain a powdery specific solid electrolyte (a composite oxide 1).

As a result of carrying out the element analysis of the obtained composite oxide 1, the composition of the composite oxide 1 was $Li_{1.98}B_4O_{6.83}F_{0.08}S_{0.07}N_{0.04}$. It is noted that among the elements contained in the composite oxide 1, Li and B were subjected to element analysis by ICP-OES, F and S were subjected to element analysis by combustion ion chromatography, and N was subjected to element analysis by an inert gas melting method. The content of O was calculated as a difference between an amount obtained by adding together analytical masses of elements other than O, and the total amount of the powder.

<Preparation and evaluation of molded body of specific solid electrolyte>

The powdery composite oxide 1 obtained as above was subjected to powder compaction molding at room temperature (27°C) at an effective pressure of 220 MPa to obtain a molded body (a compacted powder body 1) of the specific solid electrolyte. As a result of measuring the ion conductivity of the obtained compacted powder body 1, the ion conductivity of the compacted powder body 1 was $2.8 \times 10^{-7}$ S/cm at 27°C and $1.6 \times 10^{-6}$ S/cm at 60°C.

The ion conductivity of the solid electrolyte was calculated by disposing two electrodes consisting of an In foil to sandwich the prepared molded body of the solid electrolyte, measuring the alternating current impedance between the two In electrodes in a measurement frequency range of 1 Hz to 1 MHz under the conditions of a measurement temperature of 27°C and an applied voltage of 100 mV, and analyzing the arc diameter of the obtained Cole-Cole plot.

The particle size distribution of the composite oxide 1 obtained as above was in a range of several hundred nm to 10 $\mu$m, where the average particle diameter was 1.6 $\mu$m, and the median diameter (D50) was 1.5 $\mu$m.

The particle size distribution of the specific solid electrolyte prepared in each Example was calculated by acquiring a particle image according to a flow-type particle image analysis method and creating a histogram (a particle size distribution) of the particle diameters of the specific solid electrolyte. The particle diameter corresponds to a circle-equivalent diameter.

The bulk elastic modulus of the composite oxide 1 obtained as above was 36 GPa. It is noted that the bulk elastic modulus of the LBO powder before the ball milling treatment was 47 GPa.

The measurement of the bulk elastic modulus of the specific solid electrolyte prepared in each Example was carried out according to an ultrasonic attenuation method. Specifically, first, a suspension in which the specific solid electrolyte was suspended in pure water was prepared. The content of the second specific solid electrolyte in the suspension was set to 1.2% by mass with respect to the total mass of the suspension. Next, the ultrasonic attenuation spectrum of the suspension was measured, and the bulk elastic modulus (GPa) of the specific solid electrolyte is determined from the fitting according to the scattering attenuation theoretical expression. It is noted that at the time of calculating a bulk elastic modulus, the fitting was carried out by setting the density of the specific solid electrolyte to 2.3 g/mL and the Poisson's ratio to 0.12. In addition, regarding the fitting according to the above-described scattering attenuation theoretical expression, the bulk elastic modulus was calculated by using the expression (7), the expression (12), and the expression (13) described in Kohjiro Kubo et al., Ultrasonics 62 (2015), pages 186-194.

Using the composite oxide 1, the X-ray total scattering measurement is carried out with SPring-8 BL04B2 (acceleration voltage: 61.4 keV, wavelength: 0.2019 Å). A sample was sealed in a Capton capillary of 2 mmφ or 1 mmφ, and the experiment was carried out under a vacuum. It is noted that the obtained data were subjected to Fourier transform as described above to obtain a reduced two-body distribution function G(r). Fig. 1 shows the reduced two-body distribution function G(r) obtained from the composite oxide 1.

As a result of the analysis, in a reduced two-body distribution function G(r) obtained from the X-ray total scattering measurement, the first peak of which G(r) of a peak top indicates 1.0 or more and the peak top is located at 1.43 Å and the second peak of which G(r) of a peak top indicates 1.0 or more and the peak top is located at 2.40 Å were confirmed in a range where r was 1 to 5 Å, and, it was confirmed that the absolute value of G(r) in a range where r is more than 5 Å and 10 Å or less is less than 1.0 Å in the reduced two-body distribution function G(r). From the above, it was confirmed that the composite oxide 1 which is the molded body of the specific solid electrolyte obtained as above satisfies both the requirement 1-1 and the requirement 1-2 (see Fig. 1). In particular, from the comparison with Comparative Example 1 described later, it was confirmed that the peak of G(r) decreases in a range where r is more than 5 Å and 10 Å or less in the composite oxide 1 of Example 1 produced by a production method having a step of subjecting a lithium tetraborate compound to a mechanical milling treatment in the presence of a specific element source.

From the above results, it could be confirmed that the composite oxide 1 has almost no long-range order and the composite oxide 1 is noncrystalline. On the other hand, in the composite oxide 1, the peaks attributed to the interatomic distance of B-O and the interatomic distance of B-B, which are observed in the general lithium tetraborate crystal, are maintained. It was presumed that the structure of the composite oxide 1 was maintained since the general lithium tetraborate crystal has a structure (a diborate structure), in which a $BO_4$ tetrahedron and a $BO_3$ triangle are present at a ratio of 1: 1.

The composite oxide 1 was subjected to a solid $^7$Li-NMR measurement at 20°C and 120°C, respectively, to determine a full width at half maximum (full width at half maximum 1) of a peak in which the chemical shift appears in a range of -100 to +100 ppm in a spectrum obtained by a measurement at 20°C, and a full width at half maximum (full width at half maximum 2) of a peak in which the chemical shift appears in a range of -100 to +100 ppm in a spectrum obtained by a measurement at 120°C. From the obtained full width at half maximum 1 and full width at half maximum 2, the proportion of full width at half maximum (%) of the composite oxide 1, which is a percentage of a proportion of the full width at half maximum 2 to the full width at half maximum 1 {(full width at half maximum 2/full width at half maximum 1) × 100}, was calculated to be 65%.

The compacted powder body 1 was subjected to a Raman imaging measurement. The measurement conditions were as follows: an excitation light of 532 nm, an objective lens of 100 magnifications, a point scanning according to the mapping method, a step of 1 μm, an exposure time per point of 1 second, the number of times of integration of 1, and a measurement range of a range of 70 μm × 50 μm. The noise was removed from the obtained data by PCA processing.

In the Raman spectrum obtained in this way, a linear regression analysis was carried out according to the least squares method in a wave number range of 600 to 850 cm$^{-1}$, thereby determining a coefficient of determination. The coefficient of determination of the obtained compacted powder body 1 was 0.9952.

[Example 2]

A powdery specific solid electrolyte (a composite oxide 2) was prepared according to the method described in Example 1, except that, to the LBO fine substance prepared in Example 1, 0.05 g (5 % by mass with respect to the LBO powder) of LiFSI [Li(FSO$_2$)$_2$N] was added as a specific element source for doping with F, S, and N. As a result of the element analysis, the composition of the obtained composite oxide 2 was $Li_{2.01}B_4O_{7.47}F_{0.12}S_{0.12}N_{0.07}$.

Next, the powdery composite oxide 2 obtained as above was subjected to powder compaction molding at room temperature (27°C) at an effective pressure of 220 MPa to obtain a molded body (a compacted powder body 2) of the specific solid electrolyte. The ion conductivity of the obtained compacted powder body 2 was 3.0 × 10$^{-7}$ S/cm at 27°C and 1.7 × 10$^{-6}$ S/cm at 60°C.

[Example 3]

A powdery specific solid electrolyte (a composite oxide 3) was prepared according to the method described in Example 1, except that, to the LBO fine substance prepared in Example 1, 0.05 g (5 % by mass with respect to the LBO powder) of LiI was added as a specific element source for doping with I. As a result of element analysis, the composition of the obtained composite oxide 3 was $Li_{2.05}B_4O_{9.28}I_{0.07}$. It is noted that the element analysis of iodine was carried out according to combustion IC.

Next, the powdery composite oxide 3 obtained as above was subjected to powder compaction molding at room temperature (27°C) at an effective pressure of 220 MPa to obtain a molded body (a compacted powder body 3) of the specific solid electrolyte. The ion conductivity of the obtained compacted powder body 3 was $3.1 \times 10^{-5}$ S/cm at 27°C and $9.4 \times 10^{-5}$ S/cm at 60°C.

[Example 4]

A powdery specific solid electrolyte (a composite oxide 4) was prepared according to the method described in Example 1, except that, to the LBO fine substance prepared in Example 1, 0.02 g (2 % by mass with respect to the LBO powder) of LiCl was added as a specific element source for doping with Cl. As a result of element analysis, the composition of the obtained composite oxide 4 was $Li_{2.03}B_4O_{9.80}Cl_{0.06}$. The element analysis of chlorine was carried out according to combustion IC.

Next, the powdery composite oxide 4 obtained as above was subjected to powder compaction molding at room temperature (27°C) at an effective pressure of 220 MPa to obtain a molded body (a compacted powder body 4) of the specific solid electrolyte. The ion conductivity of the obtained compacted powder body 4 was $2.3 \times 10^{-5}$ S/cm at 27°C and $3.6 \times 10^{-5}$ S/cm at 60°C.

[Comparative Example 1]

As a result of subjecting the LBO powder used in Comparative Example 1 to element analysis, the composition of the obtained LBO powder was $Li_{1.96}B_{4.00}O_{6.80}$. The LBO powder was subjected to powder compaction molding at room temperature (27°C) at an effective pressure of 220 MPa to obtain a compacted powder body C1 for comparison. The ion conductivity of the obtained compacted powder body C1 could not be detected as described later.

In addition, an X-ray total scattering measurement was carried out using the LBO powder according to the method described in Example 1 to obtain a reduced two-body distribution function G(r). Fig. 9 shows the reduced two-body distribution function G(r) obtained from the LBO powder.

As a result of analysis, in the reduced two-body distribution function G(r) of the LBO powder obtained from the X-ray total scattering measurement, a first peak (corresponding to the B-O proximity) of which a peak top is located at 1.40 Å and a second peak (corresponding to the B-B proximity) of which a peak top is located at 2.40 Å were present, and G(r) of the peak top of the first peak and G(r) of the peak top of the second peak was 1.0 or more (see Fig. 9). In addition, other peaks of which peak tops are located at 3.65 Å, 5.22 Å, 5.51 Å, and 8.54 Å, were present, and the absolute value of G(r) of the peak top of each of the peaks was 1.0 or more (see Fig. 9).

[Reference Example 1]

As a result of subjecting the LBO fine substance prepared in Example 1 to element analysis, the composition of the LBO fine substance was $Li_{1.94}B_4O_{6.80}$.

Next, the LBO fine substance was subjected to powder compaction molding at room temperature (27°C) at an effective pressure of 220 MPa to obtain a compacted powder body (a compacted powder body R1) for reference. The ion conductivity of the obtained compacted powder body R1 was $7.5 \times 10^{-9}$ S/cm at 27°C and $7.5 \times 10^{-8}$ S/cm at 60°C.

The particle size distribution of each of the composite oxides (or LBO fine substances) obtained in Examples 2 to 4 and Reference Example 1 was in a range of several hundred nm to 10 μm, where the average particle diameter was 1.6 μm, and the median diameter (D50) was 1.5 μm.

In addition, regarding each of the composite oxides 2 to 4 obtained in Examples 2 to 4, the LBO powder used in Comparative Example 1, and the LBO fine substance used in Reference Example 1, the bulk elastic modulus, the reduced two-body distribution function G(r), and the proportion of the full width at half maximum 2 to the full width at half maximum 1 were determined respectively according to the methods described in Example 1. In addition, the coefficient of determination was determined for each of the compacted powder bodies obtained in Examples 2 to 4, Comparative Example 1, and Reference Example 1 according to the method described in Example 1. Table 2 summarizes the evaluation results based on each measurement.

In Table 2, the column of "Ion conductivity (S/cm)" indicates numerical values without using the exponential notation. For example, "2.8E-07" means "$2.8 \times 10^{-7}$".

In Table 2, the column of "Bulk elastic modulus (GPa)" indicates a measured value (unit: GPa) of each the composite oxides, LBO fine substance, or LBO powder measured by the above-described method based on the ultrasonic attenuation method.

In the column of "Requirement 1-1" in Table 2, in a reduced two-body distribution function G(r) obtained from the each of composite oxides, the LBO fine substance, or the LBO powder, a case where the requirement 1-1 in which a first peak of which a peak top is located in a range where r is 1.43 ± 0.2 Å and a second peak of which a peak top is located in a range where r is 2.40 ± 0.2 Å are present, and G(r) of the peak top of the first peak and G(r) of the peak top of the second peak indicate more than 1.0 is satisfied is denoted as "A", and a case where the requirement 1-1 is not satisfied is denoted as "B". In addition, in the column of "Requirement 1-2", in a reduced two-body distribution function G(r) obtained from the each of composite oxides, the LBO fine substance, or the LBO powder, a case where the requirement 1-2 in which the absolute value of G(r) in a range where r is more than 5 Å and 10 Å or less is less than 1.0 satisfied is denoted as "A", and a case where the requirement 1-1 is not satisfied is denoted as "B".

In Table 2, the column of "Proportion of full width at half maximum (%)" indicates the proportion of the full width at half maximum 2 to the full width at half maximum 1 {(full width at half maximum 2/full width at half maximum 1) × 100} (%), where each of the full width at half maximum 2 and the full width at half maximum 1 is obtained by subjecting each of the composite oxides, the LBO fine substance, or the LBO powder, to a solid $^7$Li-NMR measurement at 20°C and 120°C.

In Table 2, the column of "Coefficient of determination" indicates the coefficient of determination obtained by carrying out a linear regression analysis according to the least squares method in a wave number range of 600 to 850 cm$^{-1}$ in the Raman spectrum of each compacted powder body.

[Table 1]

| | LBO | Specific element source | | Composition (upper: charged value, lower: actually measured value) | | | | | | | |
| --- | --- | --- | --- | --- | --- | --- | --- | --- | --- | --- | --- |
| | Amount (g) | Kind | Amount (g) | Li | B | O | I | Cl | F | s | N |
| Example 1 | 1.0 | LiFSI | 0.02 | 2.02 | 4.00 | 7.07 | - | - | 0.04 | 0.04 | 0.02 |
| | | | | 1.98 | 4.00 | 6.83 | - | - | 0.08 | 0.07 | 0.04 |
| Example 2 | 1.0 | LiFSI | 0.05 | 2.05 | 4.00 | 7.18 | - | - | 0.09 | 0.09 | 0.05 |
| | | | | 2.01 | 4.00 | 7.47 | - | - | 0.12 | 0.12 | 0.07 |
| Example 3 | 1.0 | LiI | 0.052 | 2.07 | 4.00 | 7.00 | 0.07 | - | - | - | - |
| | | | | 2.05 | 4.00 | 9.28 | 0.07 | - | - | - | - |
| Example 4 | 1.0 | LiCl | 0.016 | 2.06 | 4.00 | 7.00 | - | 0.06 | - | - | - |
| | | | | 2.03 | 4.00 | 9.80 | - | 0.06 | - | - | - |
| Comparative Example 1 | 1.0 | - | - | 2.00 | 4.00 | 7.00 | - | - | - | - | - |
| | | | | 1.96 | 4.00 | 6.80 | - | - | - | - | - |
| Reference Example 1 | 1.0 | - | - | 2.00 | 4.00 | 7.00 | - | - | - | - | - |
| | | | | 1.94 | 4.00 | 6.80 | - | - | - | - | - |

[Table 2]

| | Ion conductivity (S/cm) | | Bulk elastic modulus (GPa) | Requirement 1-1 | Requirement 1-2 | Proportion of full width at half maximum (%) | Coefficient of determination |
|---|---|---|---|---|---|---|---|
| | 27°C | 60°C | | | | | |
| Example 1 | 28E-07 | 1.6E-06 | 36 | A | A | 65 | 0.9952 |
| Example 2 | 3.0E-07 | 1.7E-06 | 35 | A | A | 59 | 0.9923 |
| Example 3 | 3.1E-05 | 9.4E-05 | 35 | A | A | 52 | 0.9946 |
| Example 4 | 2.3E-05 | 3.6E-05 | 35 | A | A | 55 | 0.9931 |
| Comparative Example 1 | Undetectable | Undetectable | 47 | A | B | 100 | 0.1660 |
| Reference Example 1 | 7.5E-09 | 7.5E-08 | 36 | A | A | 46 | 0.9677 |

As described above, it was confirmed that the oxide solid electrolyte according to the embodiment of the present invention has excellent ionic conductivity as compared with the LBO powder of Comparative Example 1.

(X-ray diffraction measurement)

Using a CuK$\alpha$ ray, X-ray diffraction measurements were carried out on the powdery specific solid electrolyte (the composite oxide 2) prepared in Example 2 and the LBO powder used in Comparative Example 1. The measurement conditions were 0.01 °/step and 3 °/min.

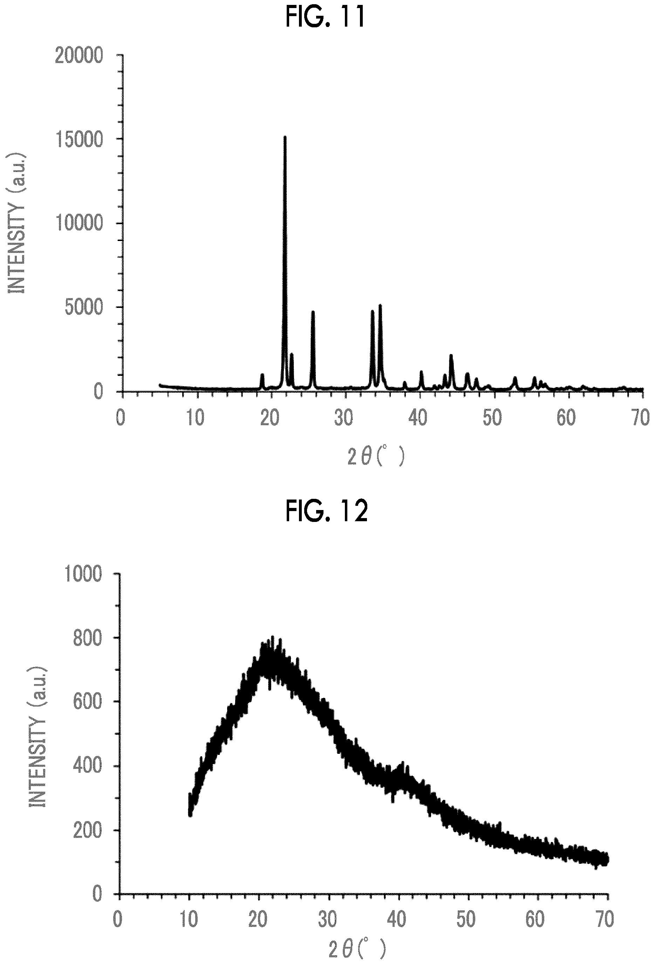

Fig. 11 shows an X-ray diffraction pattern of the LBO powder of Comparative Example 1. As shown in Fig. 11, the LBO powder used in Comparative Example 1 did not satisfy the above-described requirement 3 was not satisfied, and a plurality of peaks having a small width were observed. More specifically, the strongest peak corresponding to the (1,1,2) plane was observed at a position of 21.78° in terms of the 2$\theta$ value. Other major diffraction peaks observed were a peak corresponding to the (2,0,2) plane at a position of 25.54°, a peak corresponding to the (2,1,3) plane at a position of 33.58°, and a peak corresponding to the (3,1,2) plane at a position of 34.62°, and the intensities of these three peaks were substantially the same. These peaks are derived from the crystalline component.

On the other hand, Fig. 12 shows an X-ray diffraction pattern of the specific solid electrolyte of Example 2. As shown in Fig. 12, the specific solid electrolyte used in Example 2 satisfied the above-described requirement 3. In Fig. 11, it can be seen that the existing crystalline component is non-crystalized due to the mechanical milling treatment, and the sharp peak derived from the lithium tetraborate crystal disappears and becomes broadened.

X-ray diffraction measurement was carried out on each of the specific solid electrolytes prepared in Examples 1, 3, and 4 by the above-described method, and it was confirmed that the above-described requirement 3 is satisfied.

[Example 5]

<Preparation of second lithium compound>

A LiLaZr oxide (hereinafter, also referred to as "LLZO") having a garnet-type structure containing Li-La-Zr-O, as the second lithium compound, was synthesized according to a solid phase method by using, as raw materials, $Li_2CO_3$ (99.9%, manufactured by RARE METALLIC Co., Ltd.), $La_2O_3$ (96.68%, manufactured by FUJIFILM Wako Pure Chemical Corporation), and $ZrO_2$ (99.9%, manufactured by Shuzui Co., Ltd.). Specifically, the raw material powder was mixed in a mortar, placed on an alumina plate, covered with an alumina crucible, and baked in the atmospheric air at 850°C for 12 hours to synthesize a preliminarily baked powder. A compacted powder pellet was prepared using the synthesized preliminarily baked powder. The obtained compacted powder pellet was covered with the preliminarily baked powder and subjected to main baking in the atmospheric air at 1,100°C to 1,230°C for 6 hours to obtain a second lithium compound.

The lithium ion conductivity of the obtained second lithium compound was $3.7 \times 10^{-4}$ S/cm at 25°C. Regarding the lithium ion conductivity, it is noted that Au electrodes were installed on the front surface and the back surface of the obtained pellet of the second lithium compound according to a vapor deposition method, and the lithium ion conductivity was estimated from the analysis of the arc diameter of the Cole-Cole plot (the Nyquist plot) obtained by measuring the alternating current impedance (measurement temperature:25°C, applied voltage: 100 mV, and measurement frequency range: 1 Hz to 1 MHz) with the two Au electrodes being interposed. Further, as a result of analyzing the composition of the obtained second lithium compound according to the neutron diffraction method and the Rietveld method, it was confirmed that it is $Li_{5.95}Al_{0.35}La_3Zr_2O_{12}$.

In addition, the particle size distribution of the obtained second lithium compound was about several $\mu$m to 10 $\mu$m, and the median diameter (D50) was 3.1 $\mu$m. It is noted that the particle size distribution of the second lithium compound was determined according to the above-described image analysis method and was used as an input value for fitting at the time of obtaining the bulk elastic modulus described later. In addition, the bulk elastic modulus of the obtained second lithium compound was 105 GPa. The bulk elastic modulus was calculated according to the following method. First, the second lithium compound was suspended in pure water (concentration: 1.2% by mass), the ultrasonic attenuation spectrum of the suspension was measured, and the bulk elastic modulus of the particle was determined from the fitting according to the scattering attenuation theoretical expression. The fitting was carried out by setting the density of the second lithium compound to 4.97 g/ml and the Poisson's ratio to 0.257. An ultrasonic attenuation spectrum that monotonically increases at 10 to 70 MHz was obtained from the second lithium compound. The actually measured ultrasonic attenuation spectrum could be well fitted according to the scattering attenuation theory with the particle size distribution (approximated by the Schultz distribution with an average of 4.7 $\mu$m), the particle density, and the Poisson's ratio as the input values.

<Preparation and evaluation of molded body containing specific binder>

A powdery specific binder (a composite oxide 1) was prepared by the same method as in <Preparation of specific solid electrolyte> in Example 1.

The second lithium compound obtained as above and the specific binder were mixed at a mixing mass ratio of 8:1 (mass of second lithium compound:mass of specific binder), and the resultant mixture was subjected to powder compaction molding at an effective pressure of 100 MPa at 25°C (room temperature) to obtain a compacted powder body 5 (a second specific molded body). The lithium ion conductivity of the obtained compacted powder body 5 was $2.0 \times 10^{-6}$ S/cm. By observing the obtained compacted powder body 5 with a scanning electron microscope (observation acceleration voltage: 3 kV, EDX: 30 kV), it was revealed that the intimate attachment at the interface of the second lithium compound/the specific binder is good.

[Comparative Example 2]

A compacted powder body C2 (a second specific molded body) was obtained according to the same procedure as in Example 5, except that the LBO powder was used instead of the specific binder and the mixing mass ratio was set to 4:1. The lithium ion conductivity of the obtained compacted powder body C2 was $1.0 \times 10^{-8}$ S/cm. By observing the obtained compacted powder body C2 with a scanning electron microscope (observation acceleration voltage: 3 kV, EDX: 30 kV), it was revealed that a void at the interface of the second lithium compound/the LBO powder for the comparative example is present, and the adhesiveness at the interface of the second lithium compound/the binder is inferior.

Table 3 shows the evaluation results of Example 5 and Comparative Example 2.

In Table 3, the column of "Ion conductivity (S/cm)" and the column of "Coefficient of determination" indicate the evaluation results of the compacted powder body 5 of Example 5 or the compacted powder body C2 of Comparative Example 2, and the column of "Bulk elastic modulus (GPa)", the column of "Requirement 1-1", the column of "Requirement 1-2", and the column of "Proportion of full width at half maximum (%)" indicates the evaluation results of the composite oxide 5 of Example 5 or the LBO powder of Comparative Example 2.

In Table 3, the column of "Mixing ratio" indicates a mixing ratio of the second lithium compound to the specific binder (or the LBO powder) (mass of second lithium compound:mass of specific binder (or LBO powder)).

[Table 3]

| | Bulk elastic modulus (GPa) | Requirement 1-1 | Requirement 1-2 | Proportion of full width at half maximum (%) | Coefficient of determination | Mixing ratio | Ion conductivity (S/cm) |
|---|---|---|---|---|---|---|---|
| Example 5 | 36 | A | A | 65 | 0.9952 | 8:1 | 2.0E-06 |
| Comparative Example 2 | 47 | A | B | 100 | 0.1660 | 4:1 | 1.0E-08 |

As described above, it has been confirmed that the specific binder according to the embodiment of the present invention makes it possible to prepare a molded body having excellent ion conductivity and excellent adhesiveness as compared with the LBO powder of Comparative Example 2.

Explanation of References

1: negative electrode collector
2: negative electrode active material layer
3: solid electrolyte layer
4: positive electrode active material layer
5: positive electrode collector
6: operation portion
10: all-solid state secondary battery

**Claims**

1. An oxide solid electrolyte represented by General Formula (I),

$$A_a B_b O_c X_d \ldots \qquad (I)$$

   in General Formula (I), A represents at least one selected from the group consisting of Li and Na,
   X represents at least one selected from the group consisting of F, Cl, Br, I, S, N, H, Se, Te, C, P, Si, Al, Ga, In, Ge, As, Sb, and Sn,
   a represents the number of moles of each element represented by A and satisfies $1.75 < a < 2.45$,
   b satisfies $3.75 < b < 4.25$,
   c satisfies $6.50 < c < 10.00$, and
   d represents a total number of moles of elements represented by X and satisfies $0 < d < 0.50$.

2. The oxide solid electrolyte according to claim 1,

   wherein the oxide solid electrolyte satisfies the following requirements 1-1 and 1-2,
   the requirement 1-1: in a reduced two-body distribution function $G(r)$ of the oxide solid electrolyte obtained from an X-ray total scattering measurement, a first peak of which a peak top is located in a range where r is $1.43 \pm 0.2$ Å and a second peak of which a peak top is located in a range where r is $2.40 \pm 0.2$ Å are present, and $G(r)$ of the peak top of the first peak and $G(r)$ of the peak top of the second peak indicate more than 1.0, and
   the requirement 1-2: in the reduced two-body distribution function $G(r)$ of the oxide solid electrolyte obtained from an X-ray total scattering measurement, an absolute value of $G(r)$ is less than 1.0 in a range where r is more than 5 Å and 10 Å or less.

3. An oxide solid electrolyte,

   wherein the oxide solid electrolyte contains Li, B, O, and X, and satisfies the following requirement A-1 and requirement A-2,
   where X represents at least one kind of element selected from the group consisting of F, Cl, Br, I, S, N, H, Se, Te, C, P, Si, Al, Ga, In, Ge, As, Sb, and Sn,
   the requirement A-1: in a reduced two-body distribution function $G(r)$ of the oxide solid electrolyte obtained from an X-ray total scattering measurement, a first peak of which a peak top is located in a range where r is $1.43 \pm 0.2$ Å and a second peak of which a peak top is located in a range where r is $2.40 \pm 0.2$ Å are present, and $G(r)$ of the peak top of the first peak and $G(r)$ of the peak top of the second peak indicate more than 1.0, and
   the requirement A-2: in the reduced two-body distribution function $G(r)$ of the oxide solid electrolyte obtained from an X-ray total scattering measurement, an absolute value of $G(r)$ is less than 1.0 in a range where r is more than 5 Å and 10 Å or less.

4. The oxide solid electrolyte according to any one of claims 1 to 3,
   wherein a proportion of a full width at half maximum of a peak in which a chemical shift appears in a range of -100 to +100 ppm in a spectrum obtained in a case where a solid $^7$Li-NMR measurement is carried out at 120°C is 70% or less with respect to a full width at half maximum of a peak in which a chemical shift appears in a range of -100 to +100 ppm in a spectrum obtained in a case where the solid $^7$Li-NMR measurement is carried out at 20°C.

5. The oxide solid electrolyte according to any one of claims 1 to 4,
wherein a coefficient of determination is 0.9400 or more, where the coefficient of determination is obtained by carrying out a linear regression analysis according to a least squares method in a wave number range of 600 to 850 cm$^{-1}$ in a Raman spectrum.

6. The oxide solid electrolyte according to any one of claims 1 to 5,
wherein a bulk elastic modulus measured by an ultrasonic attenuation method is 45 GPa or less.

7. The oxide solid electrolyte according to any one of claims 1 to 6,
wherein the X includes at least one selected from the group consisting of F, Cl, Br, I, Se, Te, and H and at least one selected from the group consisting of C, P, S, and N.

8. A binder represented by General Formula (I),

$$A_aB_bO_cX_d \ldots \qquad (I)$$

in General Formula (I), A represents at least one selected from the group consisting of Li and Na,
X represents at least one selected from the group consisting of F, Cl, Br, I, S, N, H, Se, Te, C, P, Si, Al, Ga, In, Ge, As, Sb, and Sn,
a represents the number of moles of each element represented by A and satisfies $1.75 < a < 2.45$,
b satisfies $3.75 < b < 4.25$,
c satisfies $6.50 < c < 10.00$, and
d represents a total number of moles of elements represented by X and satisfies $0 < d < 0.50$.

9. The binder according to claim 8,

wherein the binder satisfies the following requirements 1-1 and 1-2,
the requirement 1-1: in a reduced two-body distribution function G(r) of the oxide solid electrolyte obtained from an X-ray total scattering measurement, a first peak in which a peak top is located in a range where r is $1.43 \pm 0.2$ Å and a second peak in which a peak top is located in a range where r is $2.40 \pm 0.2$ Å are present, G(r) of the peak top of the first peak and G(r) of the peak top of the second peak indicate more than 1.0, and an absolute value of G(r) is less than 1.0 in a range where r is more than 5 Å and 10 Å or less, and
the requirement 1-2: in the reduced two-body distribution function G(r) of the oxide solid electrolyte obtained an X-ray total scattering measurement, an absolute value of G(r) is less than 1.0 in a range where r is more than 5 Å and 10 Å or less.

10. The binder,

wherein the binder contains Li, B, O, and X, and satisfies the following requirements A-1 and A-2,
where X represents at least one kind of element selected from the group consisting of F, Cl, Br, I, S, N, H, Se, Te, C, P, Si, Al, Ga, In, Ge, As, Sb, and Sn,
the requirement A-1: in a reduced two-body distribution function G(r) of the oxide solid electrolyte obtained from an X-ray total scattering measurement, a first peak of which a peak top is located in a range where r is $1.43 \pm 0.2$ Å and a second peak of which a peak top is located in a range where r is $2.40 \pm 0.2$ Å are present, and G(r) of the peak top of the first peak and G(r) of the peak top of the second peak indicate more than 1.0, and
the requirement A-2: In the reduced two-body distribution function G(r) of the oxide solid electrolyte obtained from an X-ray total scattering measurement, an absolute value of G(r) is less than 1.0 in a range where r is more than 5 Å and 10 Å or less.

11. The binder according to any one of claims 8 to 10,
wherein a proportion of a full width at half maximum of a peak in which a chemical shift appears in a range of -100 to +100 ppm in a spectrum obtained in a case where a solid $^7$Li-NMR measurement is carried out at 120°C is 70% or less with respect to a full width at half maximum of a peak in which a chemical shift appears in a range of -100 to +100 ppm in a spectrum obtained in a case where the solid $^7$Li-NMR measurement is carried out at 20°C.

12. The binder according to any one of claims 8 to 11,
wherein a coefficient of determination is 0.9400 or more, where the coefficient of determination is obtained by carrying out a linear regression analysis according to a least squares method in a wave number range of 600 to 850 cm$^{-1}$ in a Raman spectrum.

13. The binder according to any one of claims 8 to 12,
wherein a bulk elastic modulus measured by an ultrasonic attenuation method is 45 GPa or less.

14. The binder according to any one of claims 8 to 13,
wherein the X includes at least one selected from the group consisting of F, Cl, Br, I, Se, Te, and H and at least one selected from the group consisting of C, P, S, and N.

15. A solid electrolyte layer that is located between a positive electrode and a negative electrode and contains the oxide solid electrolyte according to any one of claims 1 to 7.

16. An active material that is an active material for an all-solid state secondary battery,
wherein at least a part of a surface of the active material is coated with a coating layer containing the oxide solid electrolyte according to any one of claims 1 to 7.

17. An electrode for an all-solid state secondary battery, comprising:

an active material layer containing an active material and at least one selected from the group consisting of the oxide solid electrolyte according to any one of claims 1 to 7 and the binder according to any one of claims 8 to 14; and
a collector.

18. An electrode for an all-solid state secondary battery, comprising:

an active material layer containing the active material for an all-solid state secondary battery according to claim 16; and
a collector.

19. An all-solid state secondary battery comprising:

a positive electrode,
a negative electrode; and
a solid electrolyte layer that is located between the positive electrode and the negative electrode,
wherein at least one of the positive electrode, the negative electrode, or the solid electrolyte layer contains at least one selected from the group consisting of the oxide solid electrolyte according to any one of claims 1 to 7 and the binder according to any one of claims 8 to 14.

20. The all-solid state secondary battery according to claim 19,
wherein the solid electrolyte layer is the solid electrolyte layer according to claim 15.

21. The all-solid state secondary battery according to claim 19 or 20,
wherein at least one of the positive electrode or the negative electrode is the electrode for an all-solid state secondary battery according to claim 17 or 18.

## FIG. 1

## FIG. 2

## FIG. 3

## FIG. 4

## FIG. 5

FIG. 6

EP 4 257 549 A1

# FIG. 7

RAMAN INTENSITY

600    700    800

RAMAN SHIFT (cm$^{-1}$)

# FIG. 8

## FIG. 9

## FIG. 10

## FIG. 11

## FIG. 12

## INTERNATIONAL SEARCH REPORT

International application No.

**PCT/JP2021/044020**

**A.    CLASSIFICATION OF SUBJECT MATTER**

*C01B 35/12*(2006.01)i; *H01M 4/13*(2010.01)i; *H01M 4/36*(2006.01)i; *H01M 4/62*(2006.01)i; *H01B 1/06*(2006.01)i; *H01B 1/08*(2006.01)i; *H01M 10/052*(2010.01)i; *H01M 10/0562*(2010.01)i

FI:    H01B1/06 A; H01M4/62 Z; H01M10/052; H01M4/13; H01B1/08; H01M4/36 A; C01B35/12 A; H01M4/36 C; H01M10/0562

According to International Patent Classification (IPC) or to both national classification and IPC

**B.    FIELDS SEARCHED**

Minimum documentation searched (classification system followed by classification symbols)

C01B35/12; H01M4/13; H01M4/36; H01M4/62; H01M10/052; H01M10/0562; H01B1/06; H01B1/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | WO 2016/075921 A1 (SONY CORP.) 19 May 2016 (2016-05-19) paragraphs [0019], [0020], [0023], example 13-1 | 1-21 |
| A | JP 2019-506706 A (I-TEN CO., LTD.) 07 March 2019 (2019-03-07) paragraphs [0077], [0079], [0080] | 1-21 |

☐ Further documents are listed in the continuation of Box C.        ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | "X"    document of particular relevance; the claimed invention cannot be considered novel or cannot be considered to involve an inventive step when the document is taken alone |
| "E"    earlier application or patent but published on or after the international filing date | |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | "&"    document member of the same patent family |
| "P"    document published prior to the international filing date but later than the priority date claimed | |

| Date of the actual completion of the international search | Date of mailing of the international search report |
|---|---|
| **19 January 2022** | **01 February 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2021/044020**

| Patent document cited in search report | | | Publication date (day/month/year) | Patent family member(s) | | | Publication date (day/month/year) |
|---|---|---|---|---|---|---|---|
| WO | 2016/075921 | A1 | 19 May 2016 | US | 2017/0229734 | A1 | |
| | | | | paragraphs [0060], [0061], [0064], example 13-1 | | | |
| | | | | EP | 3220393 | A1 | |
| | | | | CN | 106716549 | A | |
| | | | | KR | 10-2017-0083020 | A | |
| | | | | CN | 109065837 | A | |
| JP | 2019-506706 | A | 07 March 2019 | US | 2018/0375151 | A1 | |
| | | | | paragraphs [0162], [0164], [0167] | | | |
| | | | | WO | 2017/115032 | A1 | |
| | | | | EP | 3398220 | A1 | |
| | | | | FR | 3046498 | A1 | |
| | | | | SG | 11201804908R | A | |
| | | | | CN | 108475765 | A | |
| | | | | KR | 10-2018-0093082 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019040709 A
- JP 2015088486 A
- JP 62022066 A
- JP 2006856 A
- JP H2006856 A
- JP 3045473 A
- JP H3045473 A

- JP 5090844 A
- JP H5090844 A
- JP 6004516 A
- JP H6004516 A
- JP 2017059393 A
- JP 2015056307 A

**Non-patent literature cited in the description**

- **KOHJIRO KUBO et al.** *Ultrasonics,* 2015, vol. 62, 186-194